(19) Europäisches Patentamt / European Patent Office / Office européen des brevets

(11) EP 4 516 823 A1

(12) **EUROPEAN PATENT APPLICATION**
published in accordance with Art. 153(4) EPC

(43) Date of publication:
**05.03.2025 Bulletin 2025/10**

(21) Application number: **23796191.7**

(22) Date of filing: **18.04.2023**

(51) International Patent Classification (IPC):
***C08F 18/24*** *(2006.01)* ***B32B 7/12*** *(2006.01)*
***B32B 27/00*** *(2006.01)* ***B32B 27/30*** *(2006.01)*
***B32B 27/40*** *(2006.01)* ***C08G 18/02*** *(2006.01)*
***C08G 18/71*** *(2006.01)* ***G02B 1/04*** *(2006.01)*
***G02C 7/00*** *(2006.01)* ***G02C 7/10*** *(2006.01)*

(52) Cooperative Patent Classification (CPC):
**B32B 7/12; B32B 27/00; B32B 27/30; B32B 27/40; C08F 18/24; C08G 18/02; C08G 18/71; G02B 1/04; G02C 7/00; G02C 7/10**

(86) International application number:
**PCT/JP2023/015506**

(87) International publication number:
**WO 2023/210448 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.04.2022 JP 2022071503**
**18.08.2022 JP 2022130516**

(71) Applicant: **TOKUYAMA CORPORATION**
**Yamaguchi 745-8648 (JP)**

(72) Inventors:
- **SHIMIZU Yasutomo**
**Shunan-shi, Yamaguchi 745-8648 (JP)**
- **MORI Katsuhiro**
**Shunan-shi, Yamaguchi 745-8648 (JP)**

(74) Representative: **Papula Oy**
**P.O. Box 981**
**00101 Helsinki (FI)**

# (54) CURABLE COMPOSITION, CURED BODY, LAMINATE, OPTICAL ARTICLE, LENS, AND SPECTACLES

(57) The purpose of the present invention is to provide: a curable composition that makes it possible to provide a cured body exhibiting excellent adhesion to a substrate; a cured body thereof; and a laminate, an optical article, a lens, and spectacles that include said cured body. One embodiment of the present invention provides a curable composition. The curable composition contains a first monomer and at least one of a second monomer and an organosilicon compound. The first monomer has an allyl group. The second monomer has a polymerizable group and a first functional group. The polymerizable group is at least one type of group selected from the group consisting of an acryloyl group, a methacryloyl group, and a vinyl group. The first functional group is at least one type of group selected from the group consisting of an isocyanate group, an isothiocyanate group, an epoxy group, and an aldehyde group. The organosilicon compound has a second functional group and a hydrolyzable group.

FIG. 2

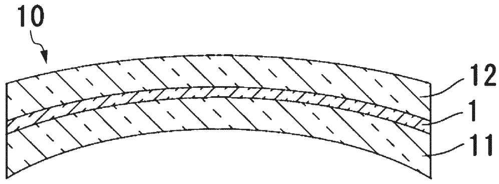


EP 4 516 823 A1

## Description

TECHNICAL FIELD

The present invention relates to a curable composition, a cured product, a laminate, an optical article, a lens, and eyeglasses.

BACKGROUND ART

Plastic eyeglasses are eyeglasses including plastic lenses as lenses. The plastic lenses are produced by subjecting, for example, semi-finished lenses as semi-finished products to various processing. On a convex surface of a semi-finished lens, a functional layer such as a hard coat layer or an antireflection film is provided. A back surface, which is a concave surface of the semi-finished lens, is subjected to cutting and polishing.

In recent years, light control lenses having photochromism whereby the color tone changes depending on an amount of ultraviolet rays have attracted attention. The light control lenses are obtained by applying a photochromic compound to a plastic lens. The photochromic compound is a compound capable of reversibly generating two or more isomers, each having mutually different light absorption spectra by action of light.

Conventionally, as a method for producing a photochromic lens, a kneading method where a photochromic compound is dispersed in a matrix for a semi-finished lens, a lamination method where a layer containing a photochromic compound is provided on a surface of a semi-finished lens, and the like have been used.

The binder sheet method is a method for producing a semi-finished lens by integrating a binder sheet, in which a resin layer containing a photochromic compound is placed between two optical sheets, with a lens substrate to form a semi-finished lens. According to the binder sheet method, a semi-finished lens can be manufactured using a self-supporting article containing a photochromic compound, and therefore, production efficiency is increased compared with the kneading method and the lamination method, which renders mass production easier.

Citation List

Patent Document

Patent Document 1: PCT International Publication No. WO2015/005391
Patent Document 2: PCT International Publication No. WO2019/163728

DISCLOSURE OF THE INVENTION

Problems to be Solved by the Invention

An object of the present invention is to provide a curable composition capable of realizing a cured product having excellent adhesion to a substrate, a cured product thereof, and a laminate, an optical article, a lens, and eyeglasses, each including the cured product.

Means for Solving the Problems

According to an aspect, a curable composition is provided. The curable composition includes a first monomer and at least one of a second monomer or an organosilicon compound. The first monomer has an allyl group. The second monomer has a polymerizable group and a first functional group. The polymerizable group is at least one selected from the group consisting of an acryloyl group, a methacryloyl group, and a vinyl group. The first functional group is at least one selected from the group consisting of an isocyanate group, an isothiocyanate group, an epoxy group, an oxetanyl group, and an aldehyde group. The organosilicon compound has a second functional group and a hydrolyzable group. The second functional group is at least one selected from the group consisting of an acryloyl group, a methacryloyl group, and a vinyl group.

According to an aspect, a cured product is provided. The cured product is a cured product of the curable composition according to the aspect.

According to an aspect, a laminate is provided. The laminate includes a substrate and a cured product. The substrate includes a polyvinyl alcohol resin or a cellulose resin. The cured product coats at least a portion of a surface of the substrate.

According to an aspect, a laminate is provided. The laminate includes first and second substrates, an adhesive layer, and a cured product. The first and second substrates include a polyvinyl alcohol resin or a cellulose resin. The adhesive layer is interposed between the first substrate and the second substrate to adhere them. The cured product coats at least a portion of a surface of at least one of the first substrate or the second substrate.

According to an aspect, an optical article is provided. The optical article includes the laminate according to the aspect.

According to an aspect, a lens is provided. The lens includes the optical article according to the aspect.

According to an aspect, eyeglasses are provided. The eyeglasses include a lens according to another aspect.

Effects of the Invention

According to the present invention, there are provided a curable composition capable of realizing a cured product excellent in adhesion to an optical substrate, a cured product thereof, and a laminate, an optical article, a lens, and eyeglasses, each including the cured product.

BRIEF DESCRIPTION OF THE DRAWINGS

FIG. 1 is a cross-sectional view schematically showing an example of an optical laminated sheet;
FIG. 2 is a cross-sectional view schematically showing an example of a laminate according to an embodiment; and
FIG. 3 is a perspective view schematically showing an example of eyeglasses according to an embodiment.

PREFERRED MODE FOR CARRYING OUT THE INVENTION

[Curable Composition]

According to an embodiment, a curable composition is provided. The curable composition includes a first monomer and at least one of a second monomer or an organosilicon compound. The first monomer has an allyl group. The second monomer has a polymerizable group and a first functional group. The polymerizable group is at least one selected from the group consisting of an acryloyl group, a methacryloyl group, and a vinyl group. The first functional group is at least one selected from the group consisting of an isocyanate group, an isothiocyanate group, an epoxy group, an oxetanyl group, and an aldehyde group. The organosilicon compound has a second functional group and a hydrolyzable group. The second functional group is at least one selected from the group consisting of an acryloyl group, a methacryloyl group, and a vinyl group.

By using the curable composition according to the embodiment, a cured product excellent in adhesion to a substrate can be obtained. The curable composition includes a first monomer and at least one of a second monomer or an organosilicon compound. The first monomer is a polymerizable compound having an allyl group, and may be a main component of the cured product. The second monomer and the organosilicon compound may be additives for imparting adhesiveness with the substrate to the cured product. That is, the second monomer is considered to be able to improve adhesion to another substrate by having at least one functional group selected from the group consisting of an isocyanate group, an isothiocyanate group, an epoxy group, an oxetanyl group, and aldehyde group, and at the same time, to be able to form an interpenetrate network between polymers by having an acryloyl group, a methacryloyl group, and a vinyl group, when copolymerizing with the allyl group, which is the first monomer, or when each functional group polymerizes, whereby excellent adhesion can be provided.

That is, the polymerizable group of the second monomer may polymerize with the allyl group of the first monomer. Alternatively, the polymerizable groups of the second monomer may polymerize with each other to form a relatively long molecular chain. This molecular chain and the first monomer may be entangled with each other. The first functional group of the second monomer may bind to a surface of an optical substrate. In particular, the first functional group of the second monomer reacts with a hydroxy group present on a surface of the substrate to form a urethane bond or a thiourethane bond, an ether bond, or an acetal bond. That is, in the second monomer, the polymerizable group may chemically bind to the first monomer or physically capture the first monomer, and the first functional group can bind to the surface of the substrate. In this way, the second monomer may crosslink a surface of the substrate and the first monomer. Therefore, the adhesion between the cured product and the substrate can be enhanced by using the curable composition containing the second monomer.

The organosilicon compound has a second functional group and a hydrolyzable group. The second functional group may polymerize with the allyl group of the first monomer. The hydrolyzable group may react with a hydroxy group present on the surface of the substrate. For example, the hydrolyzable group forms a siloxane bond or a Si-O-C bond by

dehydration condensation with a hydroxy group. That is, in the organosilicon compound, the second functional group may be chemically bonded to the first monomer and the hydrolyzable group may be bonded to the surface of the substrate. In this way, the organosilicon compound may crosslink the surface of the substrate and the first monomer. Therefore, the adhesion between the cured product and the substrate can be enhanced by using the curable composition containing an organosilicon compound.

The curable composition according to the embodiment is suitable as a curable composition for a cured product to be integrated with a substrate such as a binder sheet. In particular, it is suitable as a curable composition for forming a cured product to be integrated with a substrate containing a polyvinyl alcohol resin or a cellulose resin. The polyvinyl alcohol resin has a relatively large amount of hydroxy groups on its surface, and thus has high reactivity with the second monomer and the organosilicon compound.

Hereinafter, the curable composition according to the embodiment will be described in detail.

<First Monomer>

The first monomer is a monomer having an allyl group ($-CH_2CH=CH_2$). The first monomer may include one, two or more allyl groups. The first monomer preferably contains two allyl groups. The first monomer preferably has allyl groups at both ends of the main chain.

The first monomer preferably has a carbonic acid group (-O-(C=O)-O-). The first monomer may include one carbonic acid group, or two or more carbonic acid groups. The first monomer preferably contains two carbonic acid groups.

Examples of the first monomer include at least one selected from the group consisting of allyl diglycol carbonate, diallyl isophthalate, and diallyl terephthalate. The first monomer preferably comprises allyl diglycol carbonate.

The first monomer is preferably a monomer for use in forming a plastic lens.

The first monomer may be a main component in the curable composition. A proportion of the first monomer in the curable composition is, for example, 50% by mass or more, preferably 75% by mass or more, and more preferably 90% by mass or more. When the proportion of the first monomer is high, the appearance and durability of the cured product tend to be enhanced. The proportion of the first monomer in the curable composition is, for example, 99.5% by mass or less, and preferably 98% by mass or less. When the proportion of the first monomer is low, the adhesion between the cured product and the substrate tends to be increased.

The proportion of the first monomer in the curable composition can be calculated, for example, by isolating the first monomer from the curable composition by silica gel chromatography or the like, and measuring the weight of the obtained first monomer, or by gas chromatography or liquid chromatography analysis.

<Second Monomer>

The second monomer has a polymerizable group and a first functional group. The second monomer may include one polymerizable group, or two or more polymerizable groups. The second monomer preferably contains one polymerizable group. The second monomer may include one, two or more first functional groups. The second monomer preferably contains one first functional group.

The polymerizable group is at least one selected from the group consisting of an acryloyl group ($-C(=O)-CH=CH_2$), a methacryloyl group ($-C(=O)-C(CH_3)=CH_2$), and a vinyl group ($-CH=CH_2$). The polymerizable group is preferably an acryloyl group or a methacryloyl group.

The first functional group is at least one selected from the group consisting of an isocyanate group (-N=C=O), an isothiocyanate group (-N=C=S), an epoxy group, an oxetanyl group, and an aldehyde group. The first functional group is preferably at least one selected from the group consisting of an isocyanate group and an isothiocyanate group, and more preferably an isocyanate group.

The second monomer preferably contains a compound represented by the following Formula (1).

[Chem. 1]

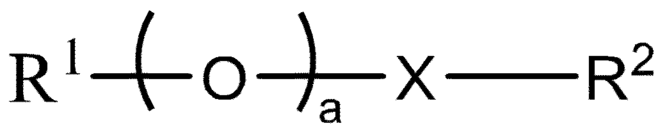

(1)

In Formula (1), $R^1$ is an acryloyl group, a methacryloyl group, or a vinyl group. $R^2$ is an isocyanate group or an isothiocyanate group.

X represents a linear or branched alkylene group having 1 to 10 carbon atoms or an alkyleneoxyalkylene group

having 2 to 10 carbon atoms. The alkylene group preferably has 1 to 5 carbon atoms. The alkylene group is more preferably a methylene group or an ethylene group. The alkyleneoxyalkylene group preferably has 2 to 6 carbon atoms. The alkyleneoxyalkylene group is more preferably an ethyleneoxyethylene group.

a is 0 or 1.

Examples of the second monomer include at least one selected from the group consisting of 2-isocyanatoethyl acrylate, 2-isocyanatoethyl methacrylate, allylisothiocyanate, allylisocyanate, (3-ethyl-3-oxetanyl)methyl methacrylate, and (3-ethyl-3-oxetanyl)methyl acrylate. The second monomer preferably contains at least one selected from the group consisting of 2-isocyanatoethyl acrylate and 2-isocyanatoethyl methacrylate.

A proportion of the second monomer in the curable composition is, for example, 0.1% by mass or more, preferably 0.5% by mass or more, and more preferably 1.0% by mass or more. When the proportion of the second monomer is high, the adhesion between the cured product and the substrate tends to increase. The proportion of the second monomer in the curable composition is, for example, 30% by mass or less, preferably 15% by mass or less, and more preferably 10% by mass or less. When the proportion of the second monomer is low, the appearance of the cured product tends to be enhanced.

A ratio M2/M1 of mass M2 of the second monomer to mass M1 of the first monomer is preferably 0.005 or more and 0.20 or less, more preferably 0.01 or more and 0.15 or less, and still more preferably 0.02 or more and 0.10 or less. When the ratio M2/M1 is within this range, a cured product excellent in both adhesion to a substrate and appearance tends to be obtained.

In the curable composition, the proportion of the second monomer can be calculated by, for example, isolating the second monomer from the curable composition by silica gel chromatography or the like ,and measuring weight of the obtained second monomer, or by gas chromatography or liquid chromatography analysis.

<Organosilicon Compound>

The organosilicon compound has a second functional group and a hydrolyzable group. The organosilicon compound may include one, two or more second functional groups. The organosilicon compound preferably contains one second functional group. The organosilicon compound may contain one hydrolyzable group, or two or more hydrolyzable groups. The organosilicon compound preferably contains 5 or less hydrolyzable groups, more preferably 3 or less hydrolyzable groups.

The second functional group is at least one selected from the group consisting of an acryloyl group, a methacryloyl group, and a vinyl group.

The hydrolyzable group includes at least one selected from the group consisting of an alkyloxy group having 1 to 3 carbon atoms and an alkyloxysilyl group having 1 to 3 carbon atoms. The hydrolyzable group preferably contains a trialkyloxysilyl group, and more preferably contains at least one of a trimethyloxysilyl group ($(MeO)_3Si-$) or a triethyloxysilyl group ($(EtO)_3Si-$).

The organosilicon compound preferably contains a compound represented by the following Formula (2).

[Chem. 2].

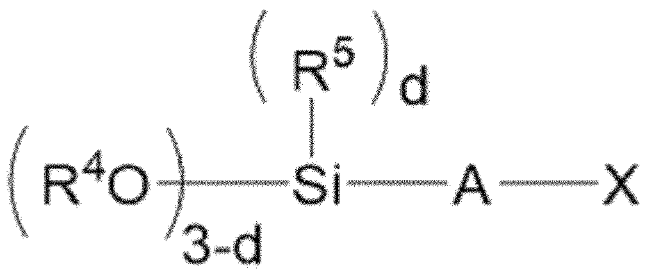

(2)

In the Formula (2), $R^4$ and $R^5$ are each an alkyl group having 1 to 3 carbon atoms. $R^4$ and $R^5$ are each preferably a methyl group or an ethyl group.

d is an integer of 0 to 2. Preferably, d is 0.

A represents an alkylene group having 1 to 10 carbon atoms, an oxyalkylene group having 1 to 10 carbon atoms, an alkyleneoxyalkylene group having 2 to 10 carbon atoms, an aminoalkylene group having 1 to 10 carbon atoms, or a phenylene group. A is preferably an ethylene group, a propylene group, an oxyethylene group, an oxypropylene group, or an alkyleneoxyalkylene group having 3 to 6 carbon atoms, and more preferably a propyleneoxymethylene group.

X represents an acryloyl group, a methacryloyl group, or a vinyl group. X is preferably an acryloyl group or a methacryloyl group.

Examples of the organosilicon compound having a (meth)acryloyl group include γ-methacryloyloxypropyltrimethoxysilane, γ-methacryloyloxypropyltriethoxysilane, γ-methacryloyloxypropylmethyldimethoxysilane, (3-acryloxypropyl)dimethylmethoxysilane, (3-acryloxypropyl)methyldimethoxysilane, (3-acryloxypropyl)trimethoxysilane, methacryloxyethoxytrimethylsilane, (methacryloxymethyl)dimethylethoxysilane, methacryloxymethyltriethoxysilane, methacryloxymethyltrimethoxysilane, methacryloxypropyldimethylethoxysilane, methacryloxypropyldimethylmethoxysilane, and methacryloxypropyltris(methoxyethoxy)silane.

Examples of the organosilicon compound having a vinyl group include vinyltriethoxysilane, vinyltrimethoxysilane, vinyltris(β-methoxyethoxy)silane, p-styryltrimethoxysilane, and p-styryltriethoxysilane.

As the organosilicon compound, a commercially available silane coupling agent may be used.

The proportion of the organosilicon compound in the curable composition is, for example, 0.1% by mass or more, preferably 0.5% by mass or more, and more preferably 1.0% by mass or more. When the proportion of the organosilicon compound is high, the adhesion between the cured product and the substrate tends to increase. The proportion of the organosilicon compound in the curable composition is, for example, 30% by mass or less, preferably 15% by mass or less, and more preferably 10% by mass or less. When the proportion of the organosilicon compound is low, the appearance of the cured product tends to be enhanced.

A ratio M3/M1 of mass M3 of the organosilicon compound to mass M1 of the first monomer is preferably 0.005 or more and 0.20 or less, more preferably 0.01 or more and 0.15 or less, and still more preferably 0.02 or more and 0.10 or less. When the ratio M3/M1 is within this range, a cured product excellent in both adhesion to a substrate and appearance tends to be obtained.

The proportion of the organosilicon compound in the curable composition can be calculated by, for example, isolating the organosilicon compound from the curable composition by silica gel chromatography or the like, and measuring weight of the obtained organosilicon compound, or by gas chromatography or liquid chromatography analysis.

The curable composition may contain only one of the second monomer or the organosilicon compound, or both the second monomer and the organosilicon compound.

<Other Components>

The curable composition may contain other components in addition to the above components. Examples of the other components include at least one additive selected from the group consisting of a polymerization initiator, a polymerization catalyst, an antistatic agent, an internal mold release agent, an antioxidant, a light stabilizer, a coloring inhibitor, a fluorescent dye, a dye, a pigment, a fragrance, a solvent, a leveling agent, a resin modifier, an infrared absorber, an ultraviolet absorber, and a visible light absorber.

Examples of the polymerization initiator include 1,1-azobiscyclohexane carbonate, diisopropyl peroxydicarbonate, 1,1'-azobiscyclohexane nitrate, and di-tert-butyl peroxide.

A blending amount of the polymerization initiator is preferably 0.1 parts by mass or more, more preferably 0.5 parts by mass or more, and still more preferably 1.0 part by mass or more with respect to 100 parts by mass of the first monomer. The blending amount of the polymerization initiator is preferably 10 parts by mass or less, more preferably 8 parts by mass or less, and still more preferably 5 parts by mass or less.

The proportion of the polymerization initiator in the curable composition is, for example, 0.1% by mass or more and 10% by mass or less, preferably 0.5% by mass or more and 8% by mass or less, and more preferably 1.0% by mass or more and 5% by mass or less.

The curable composition preferably comprises a polymerization catalyst. When including the polymerization catalyst, the adhesion between the substrate and the cured product tends to increase. As the polymerization catalyst, it is preferable to use at least one selected from the group consisting of a catalyst that promotes a reaction of an isocyanate group (-N=C=O), an isothiocyanate group (-N=C=S), an epoxy group, an oxetanyl group, and an aldehyde group, i.e., the first functional group of the second monomer, with a hydroxy group, and a catalyst that promotes hydrolysis of the hydrolyzable group of the organic silicon compound. When the curable composition containing these catalysts is used, reactivity of the first functional group of the second monomer or the hydrolyzable group of the organosilicon compound with the hydroxy group on the substrate surface is increased, and the cured product and the substrate can be more firmly bonded.

In particular, when a second monomer having an isocyanate group or an isothiocyanate group is used as the first functional group, it is preferable to use a reaction catalyst for urethanes or ureas which promotes a reaction between an active hydrogen group and the first functional group, or a catalyst for isocyanurates which promotes isocyanurate bonding, or both. That is, the curable composition preferably contains at least one polymerization catalyst selected from the group consisting of a reaction catalyst for urethanes, a reaction catalyst for ureas, and a reaction catalyst for isocyanurates, and more preferably contains a reaction catalyst for isocyanurates. When a (poly)isocyanurate cyclic bond is formed between the cured product and the substrate, the adhesion between them may be further enhanced.

Examples of the reaction catalyst for urethanes or ureas include a tertiary amine, a quaternary ammonium salt, a

quaternary phosphonium salt, a Lewis acid and an organic sulfonic acid. Examples thereof are shown below.

Examples of the tertiary amine include triethylamine, tri-n-propylamine, triisopropylamine, tri-n-butylamine, triisobutylamine, triethylamine, hexamethylenetetramine, N,N-dimethyloctylamine, N,N,N',N'-tetramethyl-1,6-diaminohexane, 4,4'-trimethylenebis(1-methylpiperidine), 1,8-diazabicyclo-(5,4,0)-7-undecene, and the like.

Examples of the phosphine include trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, and 1,2-bis(dimethylphosphino)ethane.

Examples of the quaternary ammonium salt include tetramethylammonium bromide, tetrabutylammonium chloride, tetrabutylammonium bromide and the like.

Examples of the quaternary phosphonium salt include tetramethylphosphonium bromide, tetrabutylphosphonium chloride, tetrabutylphosphonium bromide and the like.

Examples of the Lewis acid include triphenylaluminum, dimethyltin dichloride, dimethyltin bis(isooctylthioglycolate), dibutyltin dichloride, dibutyltin dilaurate, dibutyltin maleate, dibutyltin maleate polymer, dibutyltin dilicinolate, dibutyltin bis(dodecylmercaptide), dibutyltin bis(isooctylthioglycolate), dioctyltin dichloride, dioctyltin maleate, dioctyltin maleate polymer, dioctyltin bis(butyl maleate), dioctyltin dilaurate, dioctyltin dilicinolate, dioctyltin dioleate, dioctyltin di(6-hydroxy)caproate, dioctyltin bis(isooctylthioglycolate), didodecyl tin dilicinolate, various metal salts such as copper oleate, copper acetylacetonate, iron acetylacetonate, iron naphthenate, iron lactate, iron citrate, iron gluconate, potassium octanoate, 2-ethylhexyl titanate and the like.

Examples of the organic sulfonic acid include methanesulfonic acid, benzenesulfonic acid, p-toluenesulfonic acid and the like.

As the reaction catalyst for isocyanurates, at least one selected from the group consisting of a quaternary ammonium salt, an alkali metal salt, and a tertiary amine may be used. Examples of the quaternary ammonium salt include triethylmethylammonium 2-ethylhexane, trimethyl(2-hydroxypropyl)ammonium 2-ethylhexane salt, trimethyl(2-hydroxypropyl)ammonium formate and the like. Examples of the alkali metal salt include potassium acetate, potassium octylate, potassium 2-ethylhexane and the like. Examples of the tertiary amine include N,N,N',N",N"-pentamethyldiethylenetriamine, 1,2-dimethylimidazole, N,N-dimethylcyclohexylamine and the like. As the catalyst for isocyanurates, a quaternary ammonium salt is preferably used.

Examples of the reaction catalyst for isocyanurates include POLYCAT (registered trademark) 46 (manufactured by Air Products), TOYOCAT (registered trademark) TRC (manufactured by Tosoh), TOYOCAT (registered trademark) TRX (manufactured by Tosoh), TOYOCAT (registered trademark) TRV (manufactured by Tosoh), TOYOCAT (registered trademark) TR-20 (manufactured by Tosoh), and U-CAT (registered trademark) 18X (manufactured by San-Apro Ltd.).

The proportion of the polymerization catalyst in the curable composition is, for example, 1 ppm or more and 1,000 ppm or less, preferably 3 ppm or more and 100 ppm or less, and more preferably 5 ppm or more and 50 ppm or less.

The viscosity (23°C) of the curable composition is preferably 10 to 1,000 mPa·s, more preferably 10 to 500 mPa·s, and still more preferably 10 to 100 mPa·s. By being in this range, when producing a cured product by filling a mold with the curable composition, a cured product without defects in appearance or optical properties can be obtained without lowering productivity. Furthermore, the viscosity of the curable composition is desired to be stable in a certain range during filling. For example, it is desirable that viscosity Vi at the initial stage of filling and viscosity $V_{3h}$ after 3 hours satisfy the following relationship.

$$V_{3h} < 3V_i$$

By being in this range, a cured product can be stably produced even in a production process.

[Cured Product]

The cured product is obtained by curing the curable composition according to the embodiment. The cured product may be a thermosetting plastic.

The curing method is, for example, a heat treatment. In the heat treatment, for example, the temperature is gradually increased from room temperature to a curing temperature, and after reaching the curing temperature, the temperature is held for a certain period of time. The curing temperature is, for example, 60°C or more and 100°C or less. The rate of temperature increase is, for example, 1°C/hour or more and 10°C/hour or less. The hold time at the curing temperature is, for example, 1 hour or more and 30 hours or less.

The refractive index of the cured product of the curable composition according to the embodiment is, for example, 1.50. The refractive index of the cured product is obtained by, for example, Abbe refractometer NAR-3T manufactured by ATAGO.

[Laminate]

According to an embodiment, a laminate is provided. The laminate includes a substrate and a cured product. The substrate includes a polyvinyl alcohol resin or a cellulose resin. The cured product coats at least a portion of a surface of the substrate.

The laminate may include a first substrate and a second substrate, an adhesive layer, and a cured product. The first substrate and second substrate include a polyvinyl alcohol resin or a cellulose resin. The adhesive layer is interposed between the first substrate and the second substrate to adhere them. The cured product coats at least a portion of a surface of at least one of the first substrate or the second substrate. This laminate can also be referred to as an optical laminated sheet, i.e., a laminate of a binder sheet and a cured product.

In the laminate according to the embodiment, the cured product according to the embodiment coats a substrate including a polyvinyl alcohol resin or a cellulose resin. Therefore, the adhesion between the cured product and the substrate is high. For example, with the laminate according to the embodiment, high adhesion can be achieved to such a degree that the cured product cannot be peeled off even if trying to push up the cured product by pressing a blade of a scraper against a boundary between the cured product and the substrate after a boiling test.

(Substrate)

The substrate includes a polyvinyl alcohol (PVA) resin or a cellulose resin. The substrate may consist of a PVA resin alone or a cellulose resin alone, or may contain another resin. Examples of the other resin include polyvinyl formal, polyvinyl acetal, and polyvinyl butyral, each being modified with an aldehyde. Examples of the cellulose resin include an acetyl cellulose such as triacetyl cellulose and diacetyl cellulose, and a propyl cellulose such as tripropyl cellulose and dipropyl cellulose.

The substrate may be unstretched, uniaxially stretched, or biaxially stretched. A stretching direction may be any of a machine direction (MD) of an unstretched film, a direction (TD) perpendicular thereto, or a direction oblique to the machine direction. Here, the unstretched sheet refers to a sheet in an unstretched state and the uniaxially stretched sheet refers to a sheet stretched in any one of the above directions. The biaxially stretched sheet refers to a sheet stretched in two of the above stretching directions, and may be a simultaneous biaxially stretched sheet that has been stretched simultaneously, or may be a sequentially biaxially stretched sheet that has been stretched in a predetermined direction and then stretched in another direction. In a case of the biaxially stretched sheet, the sheet is, typically, preferably stretched in MD and TD. A stretching ratio is preferably 1.5 to 8 times.

The average degree of polymerization of the PVA resin is, for example, 100 or more and 10,000 or less, preferably 1,500 or more and 8,000 or less, and more preferably 2,000 or more and 5,000 or less. The average degree of polymerization of the PVA resin is determined by a method according to Japanese Industrial Standards (JIS) K6726; 1994.

The PVA resin may include boric acid. Boric acid is used as a crosslinking agent for crosslinking PVAs. The boric acid content of the PVA resin is, for example, 1% by mass or more and 20% by mass or less, preferably 3% by mass or more and 18% by mass or less, and more preferably 5% by mass or more and 15% by mass or less. The boric acid content can be calculated by inductively coupled plasma (ICP) emission analysis. Specifically, first, a substrate is dissolved in an aqueous nitric acid solution to obtain a solution. This solution is subjected to ICP analysis to calculate a boron content. The boron content is converted into a boric acid content.

The substrate may be a polarizing film with polarizability. When a binder sheet is used, at least one of the first or second substrate may be a polarizing film. A substrate with polarization preferably has a luminous transmittance of 10% or more and 80% or less and a polarization degree of 30% or more and 99.9% or less.

A polarizing substrate includes a dichroic substance. The dichroic substance includes iodine and a dichroic dye. The dichroic dye may be an azo-based dye or an anthraquinone-based dye. Examples of the dichroic dye include Chlorantine Fast Red (C.I. 28160), Congo Red (C.I. 22120), Brilliant Blue B (C.I. 24410), Benzoperpurine (C.I. 23500), Chlorazole Black BH (C.I. 22590), Direct Blue 2B (C.I. 22610), Diamine Green (C.I. 30295), Chrysofenin (C.I. 24895), Sirius Yellow (C.I. 29000), Direct Fast Red (C.I. 23630), Acid Black (C.I. 20470), Direct Sky Blue (C.I. 24400), Solophenyl Blue 4GL (C.I. 34200), Direct Copper Blue 2B (C.I. 24185), and Nippon Brilliant Violet BK Conc (C.I. 27885).

Thickness of the substrate is, for example, 10 μm or more and 100 μm or less. Thickness of the second substrate may be the same as or different from thickness of the first substrate.

(Optical Laminated Sheet)

The optical laminated sheet includes first and second substrates and an adhesive layer. The first and second substrates include a polyvinyl alcohol resin or a cellulose resin. The adhesive layer is interposed between the first and second substrates to adhere them. For the first and second substrates, the same material as that of the substrates described above is used. The optical laminated sheet may be integrated with a cured product of the curable composition

according to the embodiment to form a laminate.

FIG. 1 is a cross-sectional view schematically illustrating an example of the optical laminated sheet. An optical laminated sheet 1 shown in FIG. 1 includes a first substrate 2, a second substrate 3, and an adhesive layer 4 interposed therebetween. The adhesive layer 4 coats the entirety of one main surface of the first substrate 2 and the entirety of one main surface of the second substrate 3. The adhesive layer 4 may coat the entirety of both main surfaces of the first substrate 2 and the entirety of both main surfaces of the second substrate 3, or may coat only a portion of each main surface.

(Adhesive Layer)

The adhesive layer may include at least one selected from the group consisting of a polyurethane resin, a polyurethane urea resin, a polythiourethane resin, and a polythiourethane urea resin. The adhesive layer may contain a functional dye such as a photochromic compound. The adhesive layer may include a cured product of the adhesive composition described below.

The thickness of the adhesive layer is, for example, 0.1 μm or more and 100 μm or less. The adhesive layer may be thinner or thicker than the first and second substrates.

(Adhesive Composition)

The adhesive composition includes a functional dye and a polymerization component. The polymerization component turns into a matrix of the adhesive layer. The polymerization component includes a second prepolymer or a first polymer, and a second prepolymer or a third prepolymer. In other words, the adhesive composition may include a first combination of a polymerizable component including a second prepolymer with a functional dye, a second combination of a polymerization component including a first polymer and a second prepolymer with a functional dye, a third combination of a polymerization component including a first polymer and a third prepolymer with a functional dye, and a fourth combination of a polymerization component including a first polymer, a second prepolymer, and a third prepolymer with a functional dye.

(Functional Dye)

The functional dye includes, for example, at least one selected from the group consisting of a photochromic compound, an ultraviolet absorber, a blue light absorber, an infrared absorber, and an electrochromic compound.

As the photochromic compound, for example, at least one selected from the group consisting of a chromene compound, a fulgide compound, and a spirooxazine compound is used. As the photochromic compound, a chromene compound is preferably used. The chromene compound includes a compound having a 1-benzopyran skeleton, a spiropyran compound having a spiropyran skeleton, and a naphthopyran compound having a naphthopyran skeleton. The naphthopyran compound includes an indenonaphthopyran compound having an indenonaphthopyran skeleton. The chromene compound preferably includes an indenonaphthopyran compound having an indeno[2,1-f]naphtho[1,2-b]pyran skeleton. Cured products containing a chromene compound having an indeno[2,1-f]naphtho[1,2-b]pyran skeleton tend to have excellent durability.

The indenonaphthopyran compound preferably contains a compound represented by the following Formula (IIIa).

[Chem. 3]

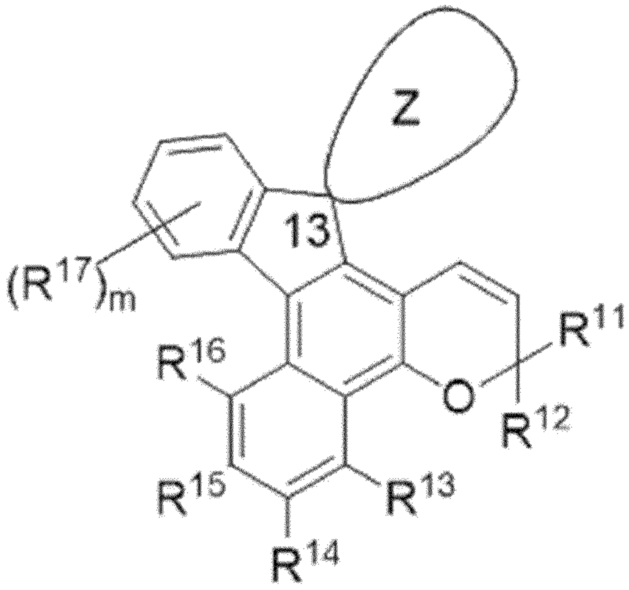

(IIIa)

In Formula (IIIa), ring Z is a substituted or unsubstituted spiro ring in which the carbon atom at the 13 position is a spiro atom. Ring Z may form an aliphatic ring, a fused polycycle, a heterocyclic ring, or a heterocyclic aromatic ring together with a carbon atom at the 13 position. The ring Z is preferably an aliphatic ring having 5 to 16 ring member carbon atoms. The aliphatic ring more preferably has an alkyl group having 1 to 3 carbon atoms as a substituent.

In Formula (IIIa), $R^{11}$, $R^{12}$, $R^{13}$, $R^{14}$, $R^{15}$, $R^{16}$, and $R^{17}$ each independently represent a hydrogen atom, a hydroxy group, a methoxycarbonyl group, an ethoxycarbonyl group, an alkyl group, a cycloalkyl group, a haloalkyl group, an alkoxy group, an amino group, a substituted amino group, a heterocyclic group which may have a substituent, a halogen atom, an alkylthio group, an arylthio group which may have a substituent, a nitro group, a formyl group, a hydroxycarbonyl group, an alkylcarbonyl group, an alkoxycarbonyl group, an aralkyl group which may have a substituent, an aralkoxy group which may have a substituent, an aryloxy group which may have a substituent, an aryl group which may have a substituent, a heteroaryl group which may have a substituent, a thiol group, an alkoxyalkylthio group, a haloalkylthio group, a cycloalkylthio group which may have a substituent, or an oligomer group. m is an integer of 0 or more and 4 or less. When m is 2 or more and 4 or less, a plurality of $R^{17}$s may have the same structure or different structures.

The alkyl group preferably has 1 to 10 carbon atoms. Examples of the alkyl group include a methyl group, an ethyl group, a n-propyl group, an isopropyl group, a n-butyl group, a sec-butyl group, a tert-butyl group, a pentyl group, and a hexyl group.

The haloalkyl group preferably has 1 to 10 carbon atoms. As the haloalkyl group, an alkyl group substituted with a fluorine atom, a chlorine atom or a bromine atom is preferable. Preferable examples of the haloalkyl group include a trifluoromethyl group, a tetrafluoroethyl group, a chloromethyl group, a 2-chloroethyl group, and a bromomethyl group.

The cycloalkyl group preferably has 3 to 8 ring carbons. Examples of the cycloalkyl group include a cyclopropyl group, a cyclobutyl group, a cyclopentyl group, and a cyclohexyl group. Although the cycloalkyl group may have a substituent, the number of carbon atoms (3 to 8 carbon atoms) does not include the number of carbon atoms of the substituent.

The alkoxy group preferably has 1 to 10 carbon atoms, and more preferably 1 to 6 carbon atoms. Preferred examples of the alkoxy group include a methoxy group, an ethoxy group, a n-propoxy group, an isopropoxy group, a n-butoxy group, a sec-butoxy group, and a tert-butoxy group.

The amino group is a primary amino group ($-NH_2$), and the substituted amino group is a secondary or tertiary amino group having one or two hydrogen atoms substituted. Examples of the substituent possessed by the substituted amino group include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, and a heteroaryl group having 4 to 14 carbon atoms. Preferred examples of the amino group include an amino group, a methylamino group, a dimethylamino group, an ethylamino group, a diethylamino group, a phenylamino group, and a diphenylamino group.

The heterocyclic group preferably has 3 to 10 carbon atoms. The heterocyclic group may be an aliphatic heterocyclic group or an aromatic heterocyclic group. Examples of the aliphatic heterocyclic group include a morpholino

group, a piperidino group, a pyrrolidinyl group, a piperazino group, and an N-methylpiperazino group. Examples of the aromatic heterocyclic group include an indolinyl group. The heterocyclic group may have a substituent. Preferred examples of the substituent include an alkyl group having 1 to 10 carbon atoms. Preferred examples of the heterocyclic group having a substituent include a 2,6-dimethylmorpholino group, a 2,6-dimethylpiperidino group, and a 2,2,6,6-tetramethylpiperidino group.

Examples of the halogen atom include a fluorine atom, a chlorine atom, a bromine atom, and an iodine atom.

The alkylthio group preferably has 1 to 10 carbon atoms. Examples of the alkylthio group include a methylthio group, an ethylthio group, a n-propylthio group, an isopropylthio group, a n-butylthio group, a sec-butylthio group, and a t-butylthio group.

The arylthio group preferably has 6 to 10 carbon atoms. Examples of the arylthio group include a phenylthio group, a 1-naphthylthio group, and a 2-naphthylthio group.

The alkylcarbonyl group preferably has 2 to 10 carbon atoms. Examples of the alkylcarbonyl group include an acetyl group and an ethylcarbonyl group.

The alkoxycarbonyl group preferably has 2 to 10 carbon atoms. Examples of the alkoxycarbonyl group include a methoxycarbonyl group and an ethoxycarbonyl group.

The aralkyl group preferably has 7 to 11 carbon atoms. Examples of the aralkyl group include a benzyl group, a phenylethyl group, a phenylpropyl group, a phenylbutyl group, and a naphthylmethyl group.

The aralkoxy group preferably has 7 to 11 carbon atoms. Examples of the aralkoxy group include a benzyloxy group and a naphthylmethoxy group.

The aryl group preferably has 6 to 12 carbon atoms. Examples of the aryl group include a phenyl group, a 1-naphthyl group, and a 2-naphthyl group.

The aryloxy group preferably has 6 to 12 carbon atoms. Examples of the aryloxy group include a phenyloxy group and a naphthyloxy group.

The heteroaryl group preferably has 3 to 12 carbon atoms. Examples of the heteroaryl group include a thienyl group, a furyl group, a pyrrolinyl group, a pyridyl group, a benzothienyl group, a benzofuranyl group, and a benzopyrrolinyl group.

The alkoxyalkylthio group preferably has 2 to 10 carbon atoms. Examples of the alkoxyalkylthio group include a methoxymethylthio group, a methoxyethylthio group, a methoxy n-propylthio group, a methoxy n-butylthio group, an ethoxyethylthio group, and a n-propoxypropylthio group.

The haloalkylthio group preferably has 1 to 10 carbon atoms. Examples of the haloalkylthio group include a trifluoromethylthio group, a tetrafluoroethylthio group, a chloromethylthio group, a 2-chloroethylthio group, and a bromomethylthio group.

The cycloalkylthio group preferably has 3 to 8 carbon atoms. Examples of the cycloalkylthio group include a cyclopropylthio group, a cyclobutylthio group, a cyclopentylthio group, and a cyclohexylthio group. The cycloalkylthio group may have a substituent, but the number of carbon atoms (3 to 8 carbon atoms) does not include the number of carbon atoms of the substituent.

The above-described cycloalkyl group, arylthio group, aralkyl group, aralkoxy group, aryloxy group, aryl group, heteroaryl group, and cycloalkylthio group may be unsubstituted or may have a substituent.

Examples of the substituent that the cycloalkyl group, arylthio group, aralkyl group, aralkoxy group, aryloxy group, aryl group, heteroaryl group, and cycloalkylthio group may have can be selected from the group consisting of a primary amino group, a secondary amino group, a tertiary amino group, an alkyl group having 1 to 10 carbon atoms, a haloalkyl group having 1 to 10 carbon atoms, an alkoxy group having 1 to 10 carbon atoms, a haloalkoxy group having 1 to 10 carbon atoms, an alkylthio group having 1 to 10 carbon atoms, a hydroxy group, a cycloalkyl group having 3 to 8 carbon atoms, an aryl group having 6 to 12 carbon atoms, an alkylaryl group having 1 to 20 carbon atoms, a heterocycloalkyl group having 1 to 8 carbon atoms and 1 to 5 heteroatoms, a heteroaryl group having 1 to 8 carbon atoms and 1 to 5 heteroatoms, an aryloxy group having 6 to 12 carbon atoms, an arylthio group having 6 to 12 carbon atoms, a cyano group, a nitro group, and a halogen atom. The number of substituents may be one, two or more.

$R^{13}$ and $R^{14}$, $R^{14}$ and $R^{15}$, and $R^{15}$ and $R^{16}$ may be bonded to each other to form an aliphatic ring having 2 to 5 carbon atoms, an aliphatic heterocyclic ring having 1 to 4 carbon atoms and 1 to 3 heteroatoms, an aromatic ring having 4 to 12 carbon atoms, or an aromatic heterocyclic ring having 3 to 11 carbon atoms and 1 to 6 heteroatoms. The aliphatic ring, the aliphatic heterocyclic ring, the aromatic ring, and the aromatic heterocyclic ring may be unsubstituted and may have at least one substituent selected from the above substituent group.

The ultraviolet absorber has an absorption wavelength in an ultraviolet (UV) region of 400 nm or less. The ultraviolet absorber may have a maximum absorption wavelength in a region of 330 nm or more and 380 nm or less, or in a region of 250 nm or more and less than 330 nm. As the ultraviolet absorber, an organic compound may be used. As the ultraviolet absorber, for example, at least one selected from the group consisting of a benzophenone derivative, ethylhexyl methoxycinnamate, a benzotriazole derivative, and a triazine derivative is used. The ultraviolet absorber preferably includes at least one selected from the group consisting of a benzophenone derivative, ethylhexyl methoxycinnamate, and

a benzotriazole derivative.

As the blue light absorber, a compound having an absorption peak in a wavelength region of more than 400 nm and 450 nm or less in an absorption spectrum may be used. Such a compound is, for example, at least one selected from the group consisting of a perylene-based compound, a porphyrin-based compound, a carotenoid-based compound, and a cyanine-based compound. As the blue light absorber, a porphyrin-based compound is preferably used, and a tetraazaporphyrin compound is more preferably used.

A high-energy visible light absorber is a blue light absorber having an absorption peak in a wavelength region of 400 nm or more and 420 nm or less. As the high-energy visible light absorber, those similar to the blue light absorber may be used.

The dye preferably includes a compound having an absorption peak in a wavelength region of 540 nm or more and 650 nm or less, and more preferably includes a compound having an absorption peak in a wavelength region of 550 nm or more and 600 nm or less in the absorption spectrum. When such a compound is contained, the antiglare properties of the cured product can be enhanced. Examples of such a compound include a nitro-based compound, an azo-based compound, an anthraquinone-based compound, a threne-based compound, a porphyrin-based compound, and a rare earth metal compound. As such a compound, at least one selected from the group consisting of a tetraazaporphyrin compound and a neodymium compound is preferably used.

Examples of the electrochromic compound include organic materials such as viologen, polymers having electrochromic properties, and metal salt complexes having a "d" atom.

The proportion of the functional dye in the solid content of the adhesive composition is, for example, 0.1% by mass or more and 10% by mass or less, and preferably 1% by mass or more and 5% by mass or less.

(Second Prepolymer)

The second prepolymer is obtained by reacting a first prepolymer obtained by reacting a first polyfunctional active hydrogen compound and a first iso(thio)cyanate compound, with a second polyfunctional active hydrogen compound, which is a chain extender. The second prepolymer has two or more iso(thio)cyanate groups. The second prepolymer preferably has iso(thio)cyanate groups at both ends of the main chain. The second prepolymer includes at least one selected from the group consisting of a urethane prepolymer, a urea prepolymer, a urethane urea prepolymer, a thiourethane prepolymer, a thiourea prepolymer, and a thiourethane urea prepolymer. The second prepolymer chemical binds to water in the atmosphere and hydroxy groups on the surfaces of the first and second substrates to produce at least one selected from the group consisting of a (thio)urethane resin, a (thio)urea resin, and a (thio)urethaneurea resin.

The number average molecular weight of the second prepolymer is preferably 5,000 or more, more preferably 10,000 or more, and still more preferably 13,000 or more. By using a second prepolymer having a large number average molecular weight, the peel strength of the optical laminated sheet tends to be enhanced. That is, it is considered that the second prepolymers having a large number average molecular weight are easily entangled with each other, and therefore, cohesive force is increased, resulting in an increase in adhesive force.

The number average molecular weight of the second prepolymer is preferably 50,000 or less, more preferably 40,000 or less, and still more preferably 30,000 or less. When the number average molecular weight of the second prepolymer is excessively large, the peel strength of the optical laminated sheet tends to decrease. That is, the second prepolymer having a large number average molecular weight includes a small amount of iso(thio)cyanate group contained per unit mass, resulting in a tendency for the adhesive force to weaken.

The number average molecular weight of the second prepolymer can be measured by gel permeation chromatography (GPC). Measurement is performed under the following conditions: column: two Shodex KD-806M (from Showa Denko) connected in series, eluent: LiBr (10 mmol/L) / DMF solution, flow rate: 1 ml/min, detector: RI detector, and second prepolymer sample solution: 1.0% dimethylformamide (DMF) solution. As analysis software, GPC analysis software "Empower Personal GPC Option" developed by Nihon Waters K.K. is used.

The softening point of the second prepolymer is preferably 90°C or higher, more preferably 100°C or higher, and still more preferably 110°C or higher. When the softening point of the second prepolymer is high, the heat resistance of the optical laminated sheet is improved, and the adhesion tends to be further enhanced. The softening point of the second prepolymer is not particularly limited; however, in one example, the softening point is 200°C or less, and in another example, the softening point is 160°C or less.

The softening point of the second prepolymer is measured, for example, by the following method. First, the second prepolymer is dissolved in an organic solvent to obtain a solution. The concentration of the second prepolymer in the solution is, for example, 34% by mass. This solution is poured into a stainless steel container and dried at 40°C for 10 hours, at 60°C for 10 hours, and further at 60°C for 12 hours in a vacuum dryer to prepare a test piece having a thickness of 1 mm. The obtained test piece is analyzed using a thermomechanical analyzer (TMA120C, manufactured by Seiko Instruments) to obtain the softening point. The measurement conditions set the temperature rise rate as 10°C/min, sets the measurement temperature range as 30 to 200°C, and uses an insertion probe having a tip diameter of 0.5 mm.

In the solid content of the adhesive composition, the second prepolymer may occupy the main component. The proportion of the second prepolymer in the solid content of the adhesive composition is, for example, 90% by mass or more and 99% by mass or less. Incidentally, when the adhesive composition is the second or fourth combination of a polymerization component including a first polymer and a second prepolymer with a photochromic compound, the proportion of the second prepolymer in the solid content of the adhesive composition is, for example, 5% by mass or more and 50% by mass or less, and preferably 10% by mass or more and 40% by mass or less.

(First Prepolymer)

The first prepolymer is obtained by reacting a first polyfunctional active hydrogen compound with a first iso(thio)cyanate compound. The first prepolymer has two or more iso(thio)cyanate groups. The first prepolymer preferably has iso(thio)cyanate groups at both ends of the main chain. The first prepolymer includes at least one selected from the group consisting of a urethane prepolymer, a urea prepolymer, a thiourethane prepolymer, and a thiourea prepolymer. The first prepolymer serves as a raw material of the second prepolymer.
A number average molecular weight of the first prepolymer is preferably 500 or more and 10,000 or less, and more preferably 1,000 or more and 5,000 or less. The number average molecular weight of the first prepolymer can be measured by the same method as the second prepolymer.

(First Iso(thio)cyanate Compound)

The first iso(thio)cyanate compound has two or more iso(thio)cyanate groups. The first iso(thio)cyanate compound preferably has two iso(thio)cyanate groups. More preferably, the first iso(thio)cyanate compound is a diisocyanate compound including two isocyanate groups.
A molar mass of the first iso(thio)cyanate compound is preferably 100 or more and 500 or less. When the first iso(thio)cyanate compound in this range is used, the second prepolymer and the first polymer having desired number average molecular weights tend to be obtained. The molar mass of the first iso(thio)cyanate compound is more preferably 150 or more and 300 or less.
The first iso(thio)cyanate compound includes at least one selected from the group consisting of an aliphatic iso(thio)cyanate compound, an alicyclic iso(thio)cyanate compound, and an aromatic iso(thio)cyanate compound. The first iso(thio)cyanate compound is preferably an alicyclic iso(thio)cyanate compound. As the first iso(thio)cyanate compound, one type thereof may be used, or two or more types thereof may be used by mixing.
Examples of the aliphatic isocyanate compound include pentamethylene diisocyanate, hexamethylene diisocyanate, heptamethylene diisocyanate, octamethylene diisocyanate, 2,4,4-trimethylhexane methylene diisocyanate, 1,2-bis(2-isocyanatoethylthio)ethane, etc.
Examples of the alicyclic isocyanate compound include isophorone diisocyanate, 1,3-bis(isocyanatomethyl) cyclohexane, 1,4-bis(isocyanatomethyl)cyclohexane, dicyclohexylmethane-4,4'-diisocyanate (hydrogenated diphenylmethane diisocyanate), norbornane diisocyanate, 2,5-bis(isocyanatomethyl)-bicyclo[2,2,1]-heptane, 2,6-bis(isocyanatomethyl)-bicyclo[2,2,1]-heptane, etc.
Examples of the aromatic isocyanate compound include xylene diisocyanate (o-, m-, p-), toluene-2,4-diisocyanate, toluene-2,6-diisocyanate, 1,3-bis(isocyanatomethyl)cyclohexane, 1,4-bis(isocyanatomethyl)cyclohexane, 4,4'-diphenylmethane diisocyanate, etc.
Examples of the aliphatic isothiocyanate compound include hexamethylene diisothiocyanate, ethane 1,2-diisothiocyanate, propane 1,3-diisothiocyanate, butane 1,4-diisothiocyanate, hexane 1,6-diisothiocyanate, 2,4,4-trimethylhexanemethylene diisothiocyanate, thiobis(propane 3-isothiocyanate), thiobis(ethane 2-isothiocyanate), dithiobis(ethane 2-isothiocyanate), etc.
Examples of the alicyclic isothiocyanate compound include isophorone diisothiocyanate, cyclohexane diisothiocyanate, 2,4-bis(isothiocyanatomethyl)norbornane, 2,5-bis(isothiocyanatomethyl)norbornane, 2,6-bis(isothiocyanatomethyl)norbornane, 3,5-bis(isothiocyanatomethyl)norbornane, norbornane diisothiocyanate, etc.
Examples of the aromatic isothiocyanate compound include p-phenylene diisopropylidene diisothiocyanate, 1,2-diisothiocyanate benzene, 1,3-diisothiocyanate benzene, 1,4-diisothiocyanate benzene, 2,4-diisothiocyanate toluene, xylene diisothiocyanate (o-, m-, p-), 2,4-tolylene diisothiocyanate, 2,6-tolylene diisothiocyanate, 1,1'-methylenebis(4-isothiocyanate benzene), 1,1'-methylenebis(4-isothiocyanate 2-methylbenzene), 1,1'-methylenebis(4-isothiocyanate 3-methylbenzene), etc.

(First Polyfunctional Active Hydrogen Compound)

The first polyfunctional active hydrogen compound has two or more active hydrogen groups. The first polyfunctional active hydrogen compound preferably has two active hydrogen groups. The active hydrogen group includes at

least one selected from the group consisting of a hydroxy group, an amino group, a carboxyl group, and a thiol group. The first polyfunctional active hydrogen compound includes, for example, at least one selected from the group consisting of a polyol compound including two or more hydroxy groups, a polyamine compound including two or more amino groups, a dicarboxylic acid including two carboxyl groups, and a polythiol compound including two or more thiol groups. As the first polyfunctional active hydrogen compound, one type thereof may be used, or two or more of types thereof may be used by mixing.

The first polyfunctional active hydrogen compound preferably includes a polyol compound. When a polyol compound is used, a first prepolymer having a (thio)urethane bond is obtained. A repeating structural portion of the polyol compound may contribute to provision of a matrix for the adhesive layer that is less likely to interfere with structural changes in the photochromic compound. When a polyol compound is used, the photochromism of the optical laminated sheet tends to be enhanced.

A number average molecular weight of the polyol compound is preferably 500 or more and 3,000 or less. When a polyol compound having the number average molecular weight within this range is used, a second prepolymer and a first polymer having desired number average molecular weights tend to be obtained. The number average molecular weight of the polyol compound is more preferably 800 or more and 2,000 or less.

The polyol compound may include at least one selected from the group consisting of a polyether polyol, a polyester polyol, a polycarbonate polyol, and a polycaprolactone polyol. The polyol compound preferably comprises a polycarbonate polyol. By using the polycarbonate polyol, the adhesion of the optical laminated sheet tends to be enhanced.

The polycarbonate polyol can be obtained by, for example, 1 phosgenation of a low molecular weight polyol or transesterification of ethylene carbonate, diethyl carbonate, diphenyl carbonate, or the like. Examples of the low molecular weight polyol include ethylene glycol, 1,2-propanediol, 1,3-propanediol, 2-methyl-1,3-propanediol, 1,2-butanediol, 1,3-butanediol, 1,4-butanediol, 1,5-pentanediol, 1,6-hexanediol, 1,8-octanediol, 1,9-nonanediol, 1,10-decanediol, 3-methyl-1,5-pentanediol, 2-ethyl-4-butyl-1,3-propanediol, diethylene glycol, dipropylene glycol, neopentyl glycol, cyclohexane-1,4-diol, cyclohexane-1,4-dimethanol, dimer acid diol, ethylene oxide or propylene oxide adduct of bisphenol A, bis(β-hydroxyethyl) benzene, xylylene glycol, glycerin, trimethylolpropane, pentaerythritol, etc.

As the polycarbonate polyol, "Duranol (registered trademark)" series manufactured by Asahi Kasei Corp., "Kuraray Polyol (registered trademark)" series manufactured by Kuraray Co., Ltd., "Placcel (registered trademark)" series manufactured by Daicel Corporation, "Nippolan (registered trademark)" series manufactured by Tosoh Corporation, "Eternacoll (registered trademark)" series manufactured by UBE Corporation, etc. may be used.

Polycaprolactone polyol can be obtained, for example, by ring-opening polymerization of ε-caprolactone. As the polycaprolactone polyol, "Placcel (registered trademark)" series manufactured by Daicel Corporation or the like can be used.

The polyether polyol can be obtained, for example, by reacting a compound having two or more active hydrogen groups in the molecule with an alkylene oxide. Examples of the compound having two or more active hydrogen-containing groups include water, ethylene glycol, propylene glycol, butanediol, glycerin, trimethylolpropane, hexanetriol, triethanolamine, diglycerin, pentaerythritol, trimethylolpropane, hexanetriol, etc. Examples of the alkylene oxide include cyclic ether compounds such as ethylene oxide, propylene oxide, and tetrahydrofuran.

As the polyether polyol, "Excenol (registered trademark)" series and "Emulster (registered trademark)" series manufactured by AGC Chemicals Company, "Adeka polyether" series manufactured by Adeka Corporation, and the like can be exemplified.

The polyester polyol can be obtained by, for example, a condensation reaction between a polyhydric alcohol and a polybasic acid. Examples of the polyhydric alcohol include ethylene glycol, 1,2-propanediol, 1,3-butanediol, 1,4-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, glycerin, trimethylolpropane, etc. Examples of the polybasic acid include succinic acid, adipic acid, azelaic acid, sebacic acid, dodecanedicarboxylic acid, cyclopentanedicarboxylic acid, cyclohexanedicarboxylic acid, orthophthalic acid, isophthalic acid, terephthalic acid, naphthalene dicarboxylic acid, etc.

As the polyester polyol, "Polylite (registered trademark)" series manufactured by DIC Corporation, "Nippolan (registered trademark)" series manufactured by Tosoh, "Maximol (registered trademark)" series manufactured by Air Water Performance Chemical Co., Ltd., or the like can be used.

The polythiol compound may include at least one selected from the group consisting of an aliphatic polythiol, an aromatic polythiol, and a polythiol containing a sulfur atom other than a mercapto group.

Examples of the aliphatic polythiol include

methanedithiol,
1,2-ethanedithiol,
1,1-propanedithiol,

1,2-propanedithiol,
1,3-propanedithiol,
2,2-propanedithiol,
1,6-hexanedithiol,
1,2,3-propanetrithiol,
tetrakis(mercaptomethyl)methane,
1,1-cyclohexanedithiol,
1,2-cyclohexanedithiol,
2,2-dimethylpropane-1,3-dithiol,
3,4-dimethoxybutane-1,2-dithiol,
2-methylcyclohexane-2,3-dithiol,
1,1-bis(mercaptomethyl)cyclohexane,
thiomalic acid bis(2-mercaptoethyl ester),
2,3-dimercaptosuccic acid (2-mercaptoethyl ester),
2,3-dimercapto-1-propanol (2-mercaptoacetate),
2,3-dimercapto-1-propanol (3-mercaptoacetate),
diethylene glycol bis(2-mercaptoacetate),
diethylene glycol bis(3-mercaptopropionate),
1,2-dimercaptopropyl methyl ether,
2,3-dimercaptopropyl methyl ether,
2,2-bis(mercaptomethyl)-1,3-propanedithiol, etc.

Examples of the aromatic polythiol include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy) benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, etc.

Examples of the polythiol containing a sulfur atom other than a mercapto group include bis(mercaptomethyl) sulfide, bis(mercaptoethyl)sulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, etc.

The amount of the first polyfunctional active hydrogen compound is preferably adjusted so that a ratio M11/M12 of a molar amount M11 of the active hydrogen group contained in the first polyfunctional active hydrogen compound to a molar amount M12 of the iso(thio)cyanate group contained in the first iso(thio)cyanate compound is 0.3 or more and 0.90 or less. When the ratio M11/M12 is within the above range, at least one of a urethane bond or a urea bond in a sufficient amount for the first prepolymer is formed, and a flexible adhesive layer that hardly inhibits a structural change of the photochromic compound can be formed. The ratio M11/M12 is preferably 0.40 or more and 0.85 or less, and more preferably 0.50 or more and 0.80 or less.

A ratio S1/S2 of a mass S1 of the first polyfunctional active hydrogen compound to a mass S2 of the first iso(thio) cyanate compound is preferably 0.1 or more and 10 or less. When the ratio S1/S2 is within the above range, the second prepolymer having a sufficient amount of isocyanate groups per unit mass can be obtained. The ratio S1/S2 is preferably 0.8 or more and 5 or less, and more preferably 1 or more and 4 or less.

(Second Polyfunctional Active Hydrogen Compound)

The second polyfunctional active hydrogen compound has two or more active hydrogen groups. The second polyfunctional active hydrogen compound reacts with the first prepolymer to produce a second prepolymer. The second polyfunctional active hydrogen compound functions as a chain extender that connects first prepolymers. The second polyfunctional active hydrogen compound preferably has two active hydrogen groups. As the second polyfunctional active hydrogen compound, the compounds mentioned as the first polyfunctional active hydrogen compound can be used.

The second polyfunctional active hydrogen compound preferably comprises a polyamine. When a polyamine is used, a second prepolymer having a (thio)urethaneurea bond can be obtained. When such a second prepolymer is used, adhesion of the optical laminated sheet tends to be enhanced. The molar mass of the polyamine is preferably 50 or more and 500 or less. When a polyamine having a molar mass within this range is used, a second prepolymer having a desired number average molecular weight tends to be obtained. The molar mass of the polyamine is more preferably 50 or more and 300 or less. The polyamine includes a diamine and a triamine, and preferably includes a diamine.

Examples of the polyamine include isophoronediamine, ethylenediamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl) piperazine, bis-(4-aminocyclohexyl)methane, bis-(4-amino-3-butylcyclohexyl)methane, 1,2-, 1,3- and 1,4-diaminocyclohexane, norbornanediamine, hydrazine, dihydrazine adipate, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, 1,2,5-pentanetriamine, etc.

The polyamine preferably contains at least one selected from the group consisting of isophoronediamine, ethylenediamine, bis-(4-aminocyclohexyl)methane, and 1,6-diaminohexane.

The amount of the second polyfunctional active hydrogen compound is preferably adjusted so that a ratio M13/M14 of a molar amount M13 of the active hydrogen group contained in the second polyfunctional active hydrogen compound to a molar amount M14 of the iso(thio)cyanate group contained in the first prepolymer is 0.21 or more and 0.9 or less. When the ratio M13/M14 is within the above range, a sufficient amount of the second prepolymer can be produced.

A ratio S3/S4 of a mass S3 of the second polyfunctional active hydrogen compound to a mass S4 of the first prepolymer is preferably 0.01 or more and 0.5 or less. When the ratio S3/S4 is within the above range, a second prepolymer having a sufficient amount of isocyanate groups per unit mass can be obtained. The ratio S3/S4 is more preferably 0.05 or more and 0.3 or less.

(First Polymer)

The first polymer is obtained by reacting the second prepolymer with a monofunctional active hydrogen compound having one active hydrogen group. The first polymer typically has no iso(thio)cyanate groups. A terminal end of the first polymer is modified with a non-reactive functional group. The first polymer includes at least one selected from the group consisting of a urethane polymer, a urea polymer, a urethane urea polymer, a thiourethane polymer, a thiourea polymer, and a thiourethane urea polymer.

The first polymer forms a chemical bond with the second prepolymer and/or the third prepolymer as well as a hydroxy group on surfaces of the first and second substrates at high temperature to form at least one selected from the group consisting of a (thio)urethane resin, a (thio)urea resin, and a (thio)urethaneurea resin.

A number average molecular weight of the first polymer is preferably 5,000 or more, more preferably 10,000 or more, and still more preferably 13,000 or more. When the first polymer having a large number average molecular weight is used, peel strength of the optical laminated sheet tends to increase. The number average molecular weight of the first polymer is preferably 50,000 or less, more preferably 40,000 or less, and still more preferably 30,000 or less. When the number average molecular weight of the first polymer is excessively large, the peel strength of the optical laminated sheet tends to decrease. The number average molecular weight can be measured in the same manner as in the second prepolymer.

The softening point of the first polymer is preferably 90°C or higher, more preferably 100°C or higher, and still more preferably 110°C or higher. When the softening point of the first polymer is high, the heat resistance of the optical laminated sheet is improved, and the adhesion tends to be further enhanced. The upper limit of the softening point of the first polymer is not particularly limited, but according to an example, the upper limit is 200°C or less, and 160°C or less in another example. The softening point of a mixture can be measured in the same manner as in the second prepolymer.

The first polymer may be present as a mixture with the second prepolymer. The mixture of the first polymer and the second prepolymer is obtained by adjusting the amount of the monofunctional active hydrogen compound. That is, by adjusting the amount of the monofunctional active hydrogen compound so that the ratio M5/M6 of a molar amount M5 of the active hydrogen group contained in the monofunctional active hydrogen compound to a molar amount M6 of the iso(thio)cyanate group contained in the second prepolymer to less than 1, a mixture of the second prepolymer and the first polymer, which is the second prepolymer in which the iso(thio)cyanate group thereof is protected by the monofunctional active hydrogen compound, is produced. The ratio M5/M6 is preferably 0.75 or more and 0.95 or less.

The number average molecular weight of this mixture is preferably 5,000 or more, more preferably 10,000 or more, and still more preferably 13,000 or more. When a mixture having a large number average molecular weight is used, the peel strength of the optical laminated sheet tends to increase. The number average molecular weight of the mixture is preferably 50,000 or less, more preferably 40,000 or less, and still more preferably 30,000 or less. If the number average molecular weight of the mixture is excessively large, the peel strength of the optical laminated sheet tends to decrease. The

number average molecular weight can be measured in the same manner as in the second prepolymer.

The softening point of this mixture is preferably 90°C or higher, more preferably 100°C or higher, and still more preferably 110°C or higher. When the softening point of the mixture is high, the heat resistance of the optical laminated sheet is improved, and the adhesion tends to be further enhanced. The upper limit of the softening point of the mixture is not particularly limited, but according to an example, the upper limit is 200°C or less, and in another example, the upper limit is 160°C or less. The softening point of the mixture can be measured in the same manner as in the second prepolymer.

The proportion of the first polymer in the solid content of the adhesive composition is, for example, 75% by mass or more and 95% by mass or less.

The mixture of the first polymer and the second prepolymer may include a fourth prepolymer. The fourth prepolymer is a compound in which some of the iso(thio)cyanate groups of the second prepolymer are protected by a monofunctional active hydrogen compound, and the rest is not protected. The fourth prepolymer may include an iso(thio) cyanate group and a monofunctional active hydrogen compound protecting group. The fourth prepolymer has an iso(thio) cyanate group, and thus, can enhance the adhesion of the optical laminated sheet, similarly to the second prepolymer.

In a mixture of the first polymer, the second prepolymer, and the fourth prepolymer, the proportion of the first polymer is 1% by mass or more and 40% by mass or less according to an example, and is 10% by mass or more and 30% by mass or less according to another example. The proportion of the second prepolymer in the mixture is 1% by mass or more and 40% by mass or less according to an example, and is 10% by mass or more and 30% by mass or less according to another example. In the mixture, the proportion of the fourth prepolymer is 1% by mass or more and 80% by mass or less in an example, and is 40% by mass or more and 80% by mass or less in another example.

The adhesive layer may be a cured product of an adhesive composition including the first polymer, the second prepolymer, and the fourth prepolymer, or may be a cured product of an adhesive composition including the first polymer and the fourth prepolymer.

(Monofunctional Active Hydrogen Compound)

The monofunctional active hydrogen compound has an active hydrogen group. The monofunctional active hydrogen compound reacts with the iso(thio)cyanate group of the second prepolymer to produce the first polymer to terminate further reaction. The active hydrogen group includes at least one selected from the group consisting of a hydroxy group, an amino group, a carboxyl group, and a thiol group.

The monofunctional active hydrogen compound includes, for example, at least one selected from the group consisting of a monool compound including a hydroxy group, a monoamine compound including an amino group, a carboxylic acid including a carboxyl group, and a monothiol compound including a thiol group. As the monofunctional active hydrogen compound, a single type may be used or a mixture of a plurality of types may be used.

The monofunctional active hydrogen compound is preferably a monoamine compound. When a monoamine compound is used, a first polymer having a (thio)urea bond is obtained.

The monofunctional active hydrogen compound preferably contains an amine having a 2,2,6,6-pentamethyl-4-piperidyl moiety as represented by the following Formula (3). Amines with a 2,2,6,6-pentamethyl-4-piperidyl moiety can function as a hindered amine, thereby enhancing the photostability of the optical laminated sheet.

[Chem. 4]

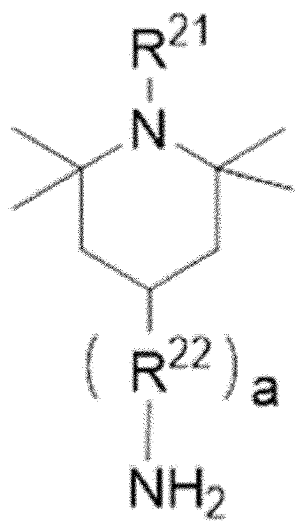

(3)

In Formula (3), $R^{21}$ represents a hydrogen atom or an alkyl group having 1 to 3 carbon atoms. $R^{22}$ is an alkylene group having 1 to 3 carbon atoms.
a is 0 or 1.

The monofunctional active hydrogen compound is preferably 1,2,2,6,6-pentamethyl-4-aminopiperidine, in which $R^{21}$ is a methyl group and a is 0.

A ratio S5/S6 of a mass S5 of the monofunctional active hydrogen compound to a mass S6 of the second prepolymer is preferably 0.001 or more and 0.100 or less. When the ratio S5/S6 is within the above range, a first polymer having a sufficient amount of isocyanate groups per unit mass can be obtained. The ratio S5/S6 is more preferably 0.010 or more and 0.030 or less.

(Third Prepolymer)

The third prepolymer is a compound having two or more iso(thio)cyanate groups obtained by reacting the first polyfunctional active hydrogen compound with the first iso(thio)cyanate compound. That is, the third prepolymer is the same compound as the first prepolymer. The third prepolymer chemically binds to the first prepolymer and hydroxy groups on surfaces of the first and second substrates at high temperature, to form at least one selected from the group consisting of a (thio)urethane resin, a (thio)urea resin, and a (thio)urethaneurea resin.

In a case where the adhesive composition is the third or fourth combination of the polymerization component including the first polymer and the third prepolymer with the photochromic compound, the proportion of the third prepolymer in the solid content of the adhesive composition is, for example, 5% by mass or more and 20% by mass or less.

(Additives)

The adhesive composition may include, for example, at least one additive selected from the group consisting of a polymerization catalyst, a polymerization initiator, an antistatic agent, an internal mold release agent, an antioxidant, a light stabilizer, an anticoloring agent, a fluorescent dye, a dye, a pigment, a fragrance, a solvent, a leveling agent, and a resin modifier. The adhesive composition preferably contains at least one of an antioxidant or a leveling agent.

As the antioxidant, 2,6-di-t-butyl-4-methyl-phenol, IRGANOX 245 manufactured by BASF Japan Ltd.: ethylenebis(oxyethylene)bis[3,5-tert-butyl-4-hydroxy-m-toluyl]propionate], IRGANOX1076 manufactured by BASF Japan Ltd.: octadecyl-3-(3,5-di-tert-butyl-4-hydroxyphenyl)propionate, IRGANOX 1010 manufactured by BASF Japan Ltd.: pentaerythritol tetrakis[3-(3,5-di-tert-butyl-4-hydroxyphenyl)propionate], IRGANOX 1035, 1075, 104, 3790, 5057, and 565 manufactured by BASF Japan, Ltd., or the like can be used.

As the leveling agent, a silicone surfactant, a fluorine-containing surfactant, or the like may be used. Specifically, L-7001, L-7002, L-7604, and FZ-2123 manufactured by Dow Toray Co., Ltd., Megaface F-470, Megaface F-1405, and Megaface F-479 manufactured by DIC Corporation, Florard FC-430 manufactured by 3M Japan, and the like can be used.

As the light stabilizer, a hindered amine-based compound having a 2,2,6,6-tetramethyl-4-piperidyl skeleton is preferably used, and a commercially available compound can be used. Examples thereof include bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidyl) sebacate, 1-[2-{3-(3,5-di-t-butyl-4-hydroxyphenyl)propionyloxy}ethyl]-4-{3-(3,5-di-t-butyl-4-hydroxyphenyl)propionyloxy}-2,2,6,6-tetramethylpiperidine, 4-benzoyloxy-2,2,6,6-tetramethylpiperidine, methyl (1,2,2,6,6-pentamethyl-4-piperidyl) sebacate, 1,2,2,6,6-pentamethyl-4-piperidinyl methacrylate, [1,2,2,6,6-pentamethyl-4-piperidinyl] 2-[[3,5-bis(1,1-dimethylethyl)-4-hydroxyphenyl]methyl]-2-butylpropanedioate, poly[{6-(1,1,3,3-tetramethylbutyl)amino-1,3,5-triazine-2,4-diyl}{ (2,2,6,6-tetramethyl-4-piperidyl)imino}hexamethylene{ (2,2,6,6-tetramethyl-4-piperidyl)imino}], 1,2,2,6,6-pentamethyl-4-piperidyl methacrylate, and the like. Examples of the trade names include Adekastab (registered trademark) LA series (LA-52, LA-57, LA-63P, LA-68, LA-72, LA-77Y, LA-81, and LA-82, or the like) manufactured by ADEKA Corporation, TINUVIN (registered trademark) series (Tinuvin 123, Tinuvin 171, Tinuvin 249, Tinuvin 292, Tinuvin 765, Tinuvin 622SF, and the like.), and Chimassorb (registered trademark) series (Chimassorb 2020 FDL and Chimassorb 944 FDL) manufactured by BASF Japan.

The proportion of the additive in the solid content of the adhesive composition is, for example, 0.1% by mass or more and 1% by mass or less.

(Organic Solvent)

The adhesive composition may contain an organic solvent in order to adjust the viscosity thereof. The organic solvent may include at least one selected from the group consisting of tetrahydrofuran, diethyl ketone, t-butyl alcohol, isopropyl alcohol, propylene glycol monomethyl ether, toluene, ethyl acetate, and cyclohexanone.

The proportion of the organic solvent in the adhesive composition is, for example, 30% by mass or more and 80%

by mass or less.

(Method for Producing Adhesive Composition)

The adhesive composition is obtained, for example, by the following first to fourth production methods.

A first method for producing the adhesive composition includes: reacting a first polyfunctional active hydrogen compound with a first iso(thio)cyanate compound to obtain a first prepolymer; reacting the first prepolymer with a second polyfunctional active hydrogen compound to obtain a second prepolymer; and mixing the second prepolymer, a photochromic compound, and an optional additive.

A second method for producing an adhesive composition includes reacting a first polyfunctional active hydrogen compound with a first iso(thio)cyanate compound to obtain a first prepolymer; reacting the first prepolymer with a second polyfunctional active hydrogen compound to obtain a second prepolymer; reacting the second prepolymer with a monofunctional active hydrogen compound to obtain a mixture of the first polymer and the second prepolymer; and mixing the first polymer, the second prepolymer, a photochromic compound, and an optional additive.

A third method for producing an adhesive composition comprises: reacting a first polyfunctional active hydrogen compound with a first iso(thio)cyanate compound to obtain a first prepolymer and a third prepolymer; reacting the first prepolymer with a second polyfunctional active hydrogen compound to obtain a second prepolymer; reacting the second prepolymer with a monofunctional active hydrogen compound to obtain a first polymer; and mixing the first polymer, the third prepolymer, a photochromic compound, and an optional additive.

A fourth method for producing an adhesive composition comprises: reacting a first polyfunctional active hydrogen compound with a first iso(thio)cyanate compound to obtain a first prepolymer; reacting the first prepolymer with a second polyfunctional active hydrogen compound to obtain a second prepolymer; reacting the second prepolymer with a monofunctional active hydrogen compound to obtain a mixture of the first polymer, the second prepolymer, and the fourth prepolymer; and mixing the first polymer, the second prepolymer, the fourth prepolymer, a photochromic compound and an optional additive.

The reaction between the first polyfunctional active hydrogen compound and the first iso(thio)cyanate compound is preferably carried out in the presence of an organic solvent. As the organic solvent, those described above can be used. The reaction is preferably performed under a nitrogen atmosphere. This reaction is performed, for example, at a reaction temperature of 60°C or more and 150°C or less for 3 hours or more and 10 hours or less. This reaction is preferably carried out until the end point is confirmed by a back titration method of the isocyanate group.

The reaction between the first prepolymer and the second polyfunctional active hydrogen compound is preferably carried out in the presence of an organic solvent. As the organic solvent, those described above can be used. The reaction is preferably carried out under a nitrogen atmosphere. This reaction is performed, for example, at a reaction temperature of 10°C or more and 30°C or less for 0.1 hours or more and 5 hours or less.

The reaction between the second prepolymer and the monofunctional active hydrogen compound is preferably performed in the presence of an organic solvent. As the organic solvent, those described above can be used. The reaction is preferably performed under a nitrogen atmosphere. This reaction is performed, for example, at a reaction temperature of -10°C or more and 10°C or less for 0.1 hours or more and 5 hours or less.

(Method for Producing Optical Laminated Sheet)

The method for producing an optical laminated sheet includes applying the adhesive composition to at least one main surface of a first substrate to obtain a coating film, and laminating a second substrate on the coating film.

A method for producing an optical laminated sheet is described in detail below.

First, the first and second substrates are prepared. As the first and second substrates, a non-stretched sheet of a commercially available polyvinyl alcohol resin may be used, and those subjected to a stretching treatment and a dyeing treatment may be used, or a cellulose resin may be used.

Next, the adhesive composition is applied to at least one main surface of the first substrate using, for example, a bar coater to form a coating film. The coating film is dried, for example, at a temperature of 60°C or more and 150°C or less for 1 minute to 1 hour. The second substrate is stacked so as to face the dried coating film, and is integrated together using, for example, a laminating roll to obtain a structure.

Next, the obtained structure is subjected to a degassing treatment. In the degassing treatment, the structure is left to stand at a temperature of 40°C or more and 80°C or less, for example, in a vacuum of 500 Pa for 5 hours or more and 20 hours or less. The degassed structure is subjected to a heat treatment.

Note that the degassing treatment may be omitted. The structure for which the degassing treatment has been omitted is subjected to a heat treatment. In addition, instead of the degassing treatment, a humidification treatment may be performed. The humidification treatment is performed, for example, at a temperature of 60°C or more and 100°C or less in an environment of 40% RH or more and 95% RH or less for 0.1 hours or more and 10 hours or less. The humidified structure

is subjected to the heat treatment.

In the heat treatment, the structure is heated, for example, at a temperature of 60°C or more and 150°C or less for 0.5 hours or more and 6 hours or less. When the adhesive composition includes the first polymer and the second prepolymer or the third polymer, this heat treatment is considered to form a composite having iso(thio)cyanate groups and crosslink the first and second optical laminated sheets. The structure after the heat treatment may be left to stand at room temperature for one or more weeks.

(Method for Producing Laminate)

The laminate according to the embodiment can be produced, for example, by the following methods. First, a mold and a gasket are prepared. The mold includes an upper mold and a lower mold. By combining the upper mold and the lower mold, a hollow portion is formed inside. The gasket is installed on a boundary surface between the upper mold and the lower mold. Notches are provided inside the gasket to fix a substrate or an optical laminated sheet. Instead of the notches, a protrusion or a recess may be provided inside the gasket. The mold and the gasket are those for use, for example, in known plastic lens molding.

Next, the end of the substrate or optical laminated sheet is inserted into the notch of the gasket so as to be fixed. This gasket is placed on the boundary surface of the molds. Thereby, the substrate or optical laminated sheet is laid across the hollow portion of the molds. Next, the hollow portion of the mold is filled with the curable composition according to the embodiment. The mold filled with the curable composition is heat-treated to cure the curable composition. In the heat treatment, for example, the temperature is gradually increased from room temperature to a curing temperature, and after reaching the curing temperature, the temperature is held for a certain period of time. The curing temperature is, for example, 60°C or more and 100°C or less. The rate of temperature rise is, for example, 1°C/hour or more and 10°C/hour or less. The holding time at the curing temperature is, for example, 1 hour or more and 30 hours or less.

After the heat treatment, the cured product is withdrawn from the mold. The withdrawn cured product is further heated at 60°C or more and 150°C or less for 1 hour or more and 10 hours or less. In this way, a laminate is obtained in which the surfaces of the first and second substrates of the substrate or optical laminated sheet are coated with the cured product according to the embodiment.

The laminate according to the embodiment may also be obtained by the following method. First, the lower mold of the mold is filled with a portion of the curable composition. On a surface of the filled curable composition, a substrate or an optical laminated sheet is placed. Next, the upper mold is placed so as to face the lower mold to form a hollow portion. The remainder of the curable composition is cast into the hollow portion. The obtained mold is heated in the same manner as described above to obtain a cured product. In this manner, an optical article according to the embodiment in which the entire main surfaces and the entire lateral surfaces of the optical laminated sheet are coated with the cured product according to the embodiment is obtained.

The laminate according to the embodiment may also be obtained by the following method. First, a substrate or an optical laminated sheet is placed along a top surface of the mold. The curable composition is applied toward a surface of the substrate or the optical laminated sheet which is not in contact with the top surface of the mold, that is, a back surface side of the substrate or the optical laminated sheet, and the heat treatment is performed under the same conditions as described above to obtain a first cured product. This first cured product is placed in a mold. The curable composition is applied toward a surface of the substrate or the optical laminated sheet which is not coated with the cured product, and the heat treatment is performed under the same conditions as described above to obtain a second cured product. In this manner, a laminate having main surfaces and optionally side surfaces of the substrate or the optical laminated sheet coated with the cured product according to the embodiment is obtained.

[Optical Article]

The optical article according to an embodiment includes the laminate according to the embodiment. Examples of the optical article include a lens, a window glass of a house or an automobile, a liquid crystal display, a sun visor, and a watch. The lens includes a semi-finished lens and a finished lens.

FIG. 2 is a cross-sectional view schematically showing an example of an optical article according to an embodiment. An optical article 10 shown in FIG. 2 includes a first cured product 11, a second cured product 12, and an optical laminated sheet 1 interposed therebetween. The optical article 10 has a concavoconvex lens shape. The optical laminated sheet 1 has a curved surface conforming to the shape of the lens. The first cured product 11 is located on a concave surface side, and the second cured product 12 is located on a convex surface side. The first cured product 11 coats the entire surface of the first substrate (not shown) of the optical substrate sheet 1. The second cured product 12 coats the entire surface of the second substrate (not shown) of the optical substrate sheet 1. Side surfaces of the optical substrate sheet 1 are not coated with the first or second cured products. The side surfaces of the optical substrate sheet 1 may be coated with the first and second cured products.

FIG. 3 is a perspective view schematically showing an example of glasses according to an embodiment. Eyeglasses 100 shown in FIG. 3 include lenses 101 and a frame 102 that supports the lenses 101. The lens 101 includes an optical article according to the embodiment.

EXAMPLES

The present invention will be described in more detail with reference to the following Examples. These Examples merely illustrate the present invention, and the spirit and scope of the present invention are not limited to these Examples.

<Example 1>

(Preparation of First Prepolymer FPP1)

A 2-L reaction vessel was charged with 100 g of a first isocyanate compound FI1, 315 g of a first polyfunctional active hydrogen compound FA1, and 40 g of an organic solvent OS1 to obtain a mixture. Isophorone diisocyanate was used as the first isocyanate compound FI1. As the first polyfunctional active hydrogen compound FA1, polycarbonate diol having a number average molecular weight of 1,000 was used. Diethyl ketone was used as the organic solvent OS1. The mixture was stirred at 100°C for 5 hours under a nitrogen atmosphere at 150 rpm to obtain a reaction solution containing the first prepolymer. Hereinafter, this first prepolymer is also referred to as a first prepolymer FPP1. The end point of the reaction was confirmed by back titration of isocyanate groups.

(Preparation of Second Prepolymer SPP1)

After 560 g of the organic solvent OS1 and 150 g of an organic solvent OS2 were added to the reaction solution at 10°C containing the first prepolymer FPP1, the solution temperature was maintained at 15°C. Tert-butyl alcohol was used as the organic solvent OS2. To this reaction solution, 21.3 g of a second polyfunctional active hydrogen compound SA1 was added dropwise and reacted at 15°C for 1 hour to obtain a reaction solution containing the second prepolymer. Bis-(4-aminocyclohexyl)methane was used as the second polyfunctional active hydrogen compound SA1. Hereinafter, the second prepolymer is also referred to as a second prepolymer SPP1. In the reaction solution containing the second prepolymer SPP1, the solid concentration was 37.6% by mass.

The number average molecular weight of the second prepolymer SPP1 was measured to be 13,000. The softening point was 98°C.

(Preparation of Adhesive Composition AC1)

An adhesive composition was obtained by mixing and stirring 100 g of the reaction solution containing the second prepolymer SPP1, 1.02 g of a photochromic compound PC1, 0.34 g of ethylene bis(oxyethylene) bis[3-(5-tert-butyl-4-hydroxy-m-tolyl)propionate], and 0.05 g of DOW CORNING TORAY L-7001 at room temperature. Hereinafter, this adhesive composition is also referred to as an adhesive composition AC1.

(Preparation of Optical Laminated Sheet OL1)

The adhesive composition AC1 was applied to a PET (polyethylene terephthalate) film (Purex film with silicon coating film manufactured by DuPont Teijin Films) using a bar coater to obtain a coating film. This coating film was dried at 100°C for 5 minutes, and then the PET film was peeled off to obtain a photochromic adhesive sheet having a thickness of about 30 μm. Next, the obtained photochromic adhesive sheet was interposed between two polyvinyl alcohol films PVF1 and bonded together to obtain a structure. The structure was in a rectangular strip shape. The adhesive composition was not applied to one end portion in a direction along a long side of the structure, to provide an uncoated portion. The polyvinyl alcohol film PVF1 had a thickness of 75 μm.

This structure was heated at 100°C for 6 hours while holding it down on all sides to prevent shrinkage. The heated structure was vacuum dried at room temperature under 13 Torr for 5 hours to obtain an optical laminated sheet. Hereinafter, the optical laminated sheet is also referred to as an optical laminated sheet OL1.

(Preparation of Curable Composition CC1)

99 parts by mass of allyl diglycol carbonate, 1 part by mass of 2-isocyanatoethyl methacrylate, and 3 parts by mass of diisopropyl peroxydicarbonate were mixed to obtain a curable composition. Hereinafter, this curable composition is also referred to as a curable composition CC1.

(Production of Laminate LS1)

The optical laminated sheet OL1 was placed in a notch on the inner side of the gasket. The gasket was placed in a glass mold such that the optical laminated sheet OL1 was located in the hollow portion. The glass mold was set so as to have a lens power D of 0.00, a lens diameter of 83 mm, and a lens thickness of 7.5 mm. The curable composition CC1 was injected into the hollow portion of the glass mold. After the curable composition CC1 was injected, the temperature of the glass mold was gradually increased from 35°C to 85°C over 17 hours using an air furnace. After heating, the cured product was taken out from the gasket and the glass mold, was placed in an oven at 90°C, and was heated for 3 hours. The outer periphery of the heated cured product was polished with a ball mill to obtain a laminate shown in FIG. 2 having a diameter of 60 mm. This operation was repeated to obtain three laminates in total. Hereinafter, this laminate is also referred to as a laminate LS1.

<Examples 2 to 5>

Laminates LS2 to LS5 were obtained in the same manner as in Example 1 except that the types or parts by mass of the first monomer and the second monomer were changed as shown in Table 5.

<Example 6>

(Preparation of First Prepolymer FPP2)

As shown in Table 1, a first prepolymer FPP2 was prepared in the same manner as in Example 1 except that the type and amount of the first polyfunctional active hydrogen compound and solvent were changed as shown in Table 1.

(Preparation of Second Prepolymer SPP1)

As shown in Table 2, a second prepolymer SPP2 was prepared in the same manner as in Example 1 except that the first prepolymer FPP2 was used and the amount of the second polyfunctional active hydrogen compound was changed.

The number average molecular weight of the second prepolymer SPP1 was measured to be 15,000. The softening point was 116°C.

(Preparation of Adhesive Composition AC2)

As shown in Table 3, an adhesive composition AC2 was prepared in the same manner as in Example 1 except that the second prepolymer SPP2 was used.

(Preparation of Optical Laminated Sheet OL2)

As shown in Table 4, an optical laminated sheet OL2 was produced in the same manner as in Example 1, except that the adhesive composition AC2 was used.

(Production of Laminate LS6)

As shown in Tables 5 and 6, a laminate LS6 was obtained in the same manner as in Example 2 except that the optical laminated sheet OL2 was used.

<Example 7>

(Preparation of Optical Laminated Sheet OL3)

First, a structure was obtained in the same manner as described in Example 1 except that a polyvinyl alcohol film PVF2 was used as the first and second substrates. This structure was subjected to a humidification treatment for 30 minutes in an environment of 85°C and 80% RH, while holding it down on all sides to prevent shrinkage. The humidified structure was heated at 100°C for 5 hours to obtain an optical laminated sheet OL3.

(Production of Laminate LS7)

As shown in Tables 5 and 6, a laminate LS7 was obtained in the same manner as in Example 2 except that the

optical laminated sheet OL3 was used.

<Example 8>

(Preparation of Optical Laminated Sheet OL4)

Optical laminated sheet OL4 was obtained in the same manner as described in Example 1, except that polyvinyl alcohol film PVF3 was used as the first and second substrates, as shown in Table 4.

(Production of Laminate LS8)

As shown in Tables 5 and 6, a laminate LS8 was obtained in the same manner as in Example 2 except that the optical laminated sheet OL4 was used.

<Examples 9 to 14>

As shown in Table 5, laminates LS9 to LS14 were obtained in the same manner as in Example 1, except that the parts by mass of the first monomer and the second monomer were changed or a polymerization catalyst was used.

<Example 15>

(Preparation of Optical Laminated Sheet OL5)

The adhesive composition AC2 was applied to a PET (polyethylene terephthalate) film (Purex film, with silicon coating film manufactured by DuPont Teijin Films) using a bar coater to obtain a coating film. This coating film was dried at 100°C for 5 minutes, and then the PET film was peeled off to obtain a photochromic adhesive sheet having a thickness of about 30 μm. Next, the obtained photochromic adhesive sheet was interposed between two sheets of triacetyl cellulose TAC1 and bonded together to obtain a structure. The structures were in a rectangular strip shape. The adhesive composition was not applied to one end portion in a direction along a long side of the structure, to provide an uncoated portion. The triacetyl cellulose film TAC1 had a thickness of 75 μm.

This structure was degassed under conditions of 40°C and 13 Torr for 16 hours, and then heated at 100°C for 6 hours to obtain an optical laminated sheet. Hereinafter, this optical laminated sheet is also referred to as an optical laminated sheet OL5.

(Production of Laminate LS15)

A laminate LS15 was obtained in the same manner as in Example 4, except that the optical laminated sheet OL5 was used.

<Comparative Example 1>

A laminate LS16 was obtained in the same manner as in Example 1, except that the second monomer was not added to the curable composition CC1.

<Comparative Examples 2 and 3>

As shown in Table 5, laminates LS17 and LS18 were obtained in the same manner as in Example 2, except that other monomers were used instead of the second monomer.

The configurations of the first prepolymer, the second prepolymer, and the adhesive composition are summarized in Tables 1 to 3 below.

[Table 1]

Table 1

| First prepolymer | First polyfunctional hydrogen compound | | First isocyanate compound | | Solvent | | Reaction conditions |
|---|---|---|---|---|---|---|---|
| | Type | Amount (9) | Type | Amount (g) | Type | Amoun t (g) | Temperature (°C) |
| FPP1 | FA1 | 315 | FI1 | 100 | OS1 | 40 | 100 |
| FPP2 | FA2 | 252 | FI1 | 100 | OS1 | 200 | 100 |

[Table 2]

Table 2

| Second prepolymer | First prepolymer | Second | | Solvent | | Reaction | | n1/n2/n3 |
|---|---|---|---|---|---|---|---|---|
| | | Type | Amount (g) | Type | Amoun t (g) | Temperature (°C) | Time (hour ) | |
| SPP1 | FPP1 | SA1 | 21.3 | OS1<br>OS2 | 560<br>150 | 15 | 1 | 0.7/1/0.23 |
| SPP2 | FPP2 | SA1 | 23 | OS1<br>OS2 | 560<br>150 | 15 | 1 | 0.7/1/0.24 |

In Table 2, each ratio in the column denoted by "n1/n2/n3" represents a ratio of a total molar amount (n1) of active hydrogen groups contained in the first polyfunctional active hydrogen compound and a total molar amount (n3) of active hydrogen groups contained in the second polyfunctional active hydrogen compound, provided that a total molar amount (n2) of isocyanate groups contained in the first isocyanate compound is 1.

[Table 3]

Table 3

| Adhesive composition | Second | | Photochromic | | Additive | |
|---|---|---|---|---|---|---|
| | Type | Amount (g) | Type | Amount (g) | Type | Amoun t (g) |
| AC1 | SPP1 | 100 | PC1 | 1.02 | HP<br>CF | 0.34<br>0.05 |
| AC2 | SPP2 | 100 | PC1 | 1.02 | HP<br>CF | 0.34<br>0.05 |

The compounds shown in Tables 1 to 3 are as follows.

(First Polyfunctional Active Hydrogen Compound)

FA1: Duranol (polycarbonate diol, number average molecular weight 1,000) manufactured by Asahi Kasei Corp. FA2: Duranol (polycarbonate diol, number average molecular weight 800) manufactured by Asahi Kasei Corp.

(First Isocyanate Compound)
FI1: isophorone diisocyanate
(Second polyfunctional active hydrogen compound: chain extender)
SA1: bis-(4-aminocyclohexyl)methane
(Photochromic compound)
PC1: compound represented by the following formula.

[Chem. 5]

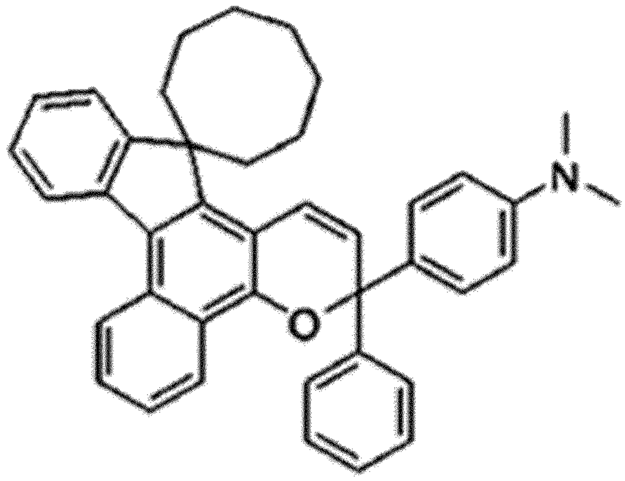

(Organic Solvents)

OS1: diethyl ketone
OS2: tert-butyl alcohol

(Other Additives)

HP: ethylene bis(oxyethylene)bis[3-(5-tert-butyl-4-hydroxy-m-tolyl)propionate]
CF: DOW CORNING TORAY L-7001

<Evaluation Test>

(Measurement of Photochromism of Optical Laminated Sheet and Laminate)

The maximum absorption wavelength, color optical density, and fading speed of the obtained optical laminated sheets were measured by the following methods. The results are shown in Table 4.

Specifically, first, at a temperature of 23°C, a surface of substrates of an optical laminated sheet was irradiated through an aero-mass filter (manufactured by Corning Co., Ltd.) with a xenon lamp L-2480 (300 W) SHL-100 manufactured by Hamamatsu Photonics Co., Ltd. for 120 seconds to develop the color of the photochromic compound. Beam intensity was set to 365 nm = 2.4 mW/cm$^2$ and 245 nm = 24 $\mu$W/cm$^2$.

The maximum absorption wavelength ($\lambda$max) after color development was determined by a spectrophotometer (instantaneous multichannel photodirector MCPD1000) manufactured by Otsuka Electronics Co., Ltd.

Absorbance $\varepsilon(0)$ at the maximum absorption wavelength of the optical laminated sheet was measured when the xenon lamp was not irradiated. Next, the optical laminated sheet was irradiated with the xenon lamp at the beam intensity for 120 seconds, and absorbance $\varepsilon(120)$ at the maximum absorption wavelength of the optical laminated sheet was measured. A value obtained by subtracting the absorbance $\varepsilon(0)$ from the absorbance $\varepsilon(120)$ was defined as color optical density. It is considered that the photochromism is more superior with higher value thereof.

The time required for the color optical density to decrease to 1/2 was measured, and this was defined as a fading speed [t1/2 (sec.)]. It is considered that the photochromism is more superior with shorter time.

The maximum absorption wavelength, color optical density, and fading speed of the obtained laminate were measured under the same conditions as described above. The results were the same as the values of the optical laminated sheet.

(Measurement of Peel Strength of Optical Laminated Sheet)

The obtained optical laminated sheet was cut into a strip shape of 25 mm × 100 mm to obtain test pieces. At this time, cutting was done so as to include one end along a long side not containing the coating film of the adhesive composition. With regard to this test piece, portions of the first and second substrates not having the adhesive composition applied thereon were clamped in an upper jig and a lower jig, respectively, and the test piece was set in a test machine: autograph AGS-500NX manufactured by Shimadzu Corporation. The upper jig was pulled at a crosshead speed of 100 mm/min, and an average peeling force when the upper jig was pulled by 60 mm was measured. The average peel strength is shown in Table **4.** The optical laminated sheet OL 5 is described as measurement not possible in Table 4, because the optical laminated sheet OL5 was not peeled off when pulled and the sheet itself was broken.

(Appearance Evaluation of Optical Laminated Sheet)

The appearance of the optical laminated sheet was evaluated by the following method. First, the optical laminated sheet was visually observed in a black box equipped with a fluorescent lamp, and it was confirmed whether or not air bubbles were present in the optical laminated sheet. The evaluation criteria were as follows. The results are shown in Table 4.

0: No bubbles were observed in five sheets of 10 cm square optical laminated sheet;
1: in five sheets of 10 cm square optical laminated sheet, 1 to 3 bubbles were observed;
2: in five sheets of 10 cm square optical laminated sheet, 4 to 9 bubbles were observed; and
3: in five sheets of 10 cm square optical laminated sheet, 10 or more bubbles were observed.

(Evaluation of Adhesion of Laminate)

Adhesion of the optical laminated sheet of the obtained laminate and the cured product was evaluated by the following method. First, a sample in which the optical laminated sheet was in close contact with one surface of the cured product was prepared. The dimensions of the sample were 75 mm in length, 10 mm in width, and 1 mm in thickness. Specifically, first, when obtaining lenses of each Example and each Comparative Example, a laminate was produced in the same manner as in Examples and Comparative Examples except that a release agent (TS-56-WR2 (manufactured by Tokuyama)) was applied to one surface of the optical laminated sheet to form a flat lens having a thickness of 2 mm. This laminate was cut into a width of 10 mm, and then the cured product on a surface coated with the release agent was peeled off to obtain a sample of an optical laminated sheet having only one surface thereof coated with the cured product. An optical laminated sheet portion and a cured product portion of this sample were clamped in an upper jig and a lower jig, respectively, and the sample was set in the test machine: autograph AGS-500NX manufactured by Shimadzu Corporation. The upper jig was pulled at a crosshead speed of 100 mm/min, and an average peeling force when the upper jig was pulled by 60 mm was measured. This average peel strength is shown as adhesion in Table 6.

(Evaluation of Moldability of Laminate)

Moldability of the obtained laminate was evaluated by the following method. Specifically, a surface of the cured product (7.5 mm thick) was irradiated with light from a high-pressure mercury lamp, and the projection was visually observed for evaluation. The results are shown in Table 6. The evaluation criteria were as follows.

1: no optical distortion;
2: optical distortion is found in a portion less than or equal to half of the cured product;
3: optical distortion is found in more than half and less than the entire portion of the cured product; and
4: optical distortion is found in the entirety of the cured product.

(Stability Evaluation of Curable Composition)

The stability of the obtained laminate was evaluated by the following method. Specifically, viscosity of the prepared curable composition was measured using a Brookfield rotary viscometer (BROOKFIELD RST-CPS Rheometer manufactured by EKO Instruments Co., Ltd.). In the measurement, viscosity of the curable composition at the initial stage of preparation and viscosity of the curable composition after 3 hours at 23°C were measured under conditions of shear stress of 100 (Pa) at 23°C.

Component ratios and evaluation results of the optical laminated sheets, the curable compositions, and the laminate are summarized in Tables 4 to 6 below.

[Table 4]

Table 4

| Optical laminated sheet | Adhesive compositio n | First/second optical substrate | Color optical density | Fading speed (seconds ) | Peeling strength (N/25 mm) | Appearance |
|---|---|---|---|---|---|---|
| OL1 | AC1 | PVF1/PVF1 | 1.1 | 40 | 70 | 0 |
| OL2 | AC2 | PVF1/PVF1 | 1.1 | 45 | 70 | 0 |
| OL3 | AC1 | PVF2/PVF2 | 1.1 | 40 | 70 | 2 |
| OL4 | AC1 | PVF1/PVF3 | 1.1 | 40 | 70 | 1 |
| OL5 | AC2 | TAC1/TAC1 | 1.1 | 40 | Unmeasurable | 0 |

[Table 5]

Table 5

| | First monomer CR39 | Second monomer/other monomers | | | | Polymerization catalyst | |
|---|---|---|---|---|---|---|---|
| | part(s) by mass | Type | Polymerizabl e group | First functional | part(s) by mass | Type | ppm |
| Example 1 | 99 | MOI | Methacryloyl group | Isocyanate group | 1 | - | - |
| Example 2 | 97 | MOI | Methacryloyl group | Isocyanate group | 3 | - | - |
| Example 3 | 95 | MOI | Methacryloyl group | Isocyanate group | 5 | - | - |
| Example 4 | 90 | MOI | Methacryloyl group | Isocyanate group | 10 | - | - |
| Example 5 | 97 | AOI | Acryloyl group | Isocyanate group | 3 | - | - |
| Example 6 | 97 | MOI | Methacryloyl group | Isocyanate group | 3 | - | - |
| Example 7 | 97 | MOI | Methacryloyl group | Isocyanate group | 3 | - | - |
| Example 8 | 97 | MOI | Methacryloyl group | Isocyanate group | 3 | - | - |
| Example 9 | 70 | MOI | Methacryloyl group | Isocyanate group | 30 | - | - |
| Example 10 | 99.9 | MOI | Methacryloyl group | Isocyanate group | 0.1 | - | - |
| Example 11 | 98.1 | MOI | Methacryloyl group | Isocyanate group | 1.9 | - | - |

(continued)

| | First monomer CR39 | Second monomer/other monomers | | | | Polymerization catalyst | |
|---|---|---|---|---|---|---|---|
| | part(s) by mass | Type | Polymerizabl e group | First functional | part(s) by mass | Type | ppm |
| Example 12 | 98 | MOI | Methacryloyl group | Isocyanate group | 2 | DBTD | 10 |
| Example 13 | 98 | MOI | Methacryloyl group | Isocyanate group | 2 | TEAS | 10 |
| Example 14 | 98 | MOI | Methacryloyl group | Isocyanate group | 2 | TEAS | 20 |
| Example 15 | 90 | MOI | Methacryloyl group | Isocyanate group | 10 | - | - |
| Comparative Example 1 | 100 | - | - | - | - | - | - |
| Comparative Example 2 | 97 | MTMA | Methacryloyl group | - | 3 | - | - |
| Comparative Example 3 | 97 | B-NCO | - | Isocyanate group | 3 | - | - |

Materials shown in Tables 4 and 5 are as follows.

(Polyvinyl Alcohol Film)

PVF1: polyvinyl alcohol film (thickness: 75 μm);
PVF2: polyvinyl alcohol film (thickness: 30 μm) having a stretching ratio of 3 times and having been subjected to 1.3% boric acid crosslinking; and
PVF3: a polyvinyl alcohol polarizing film (thickness: 27 μm) containing a dichroic dye having a luminous transmittance of 44%, a degree of polarization of 94.4%, and gray color tone.

(Cellulose Film)

TAC1: triacetyl cellulose (thickness: 80 μm)

(First Monomer)

CR39: allyl diglycol carbonate

(Second Monomer)

AOI: 2-isocyanatoethyl acrylate
MOI: 2-isocyanatoethyl methacrylate

(Other Monomers)

MTMA: 2-methoxyethyl methacrylate
B-NCO: butyl isocyanate

(Polymerization Catalyst)

TEAS: triethylmethylammonium 2-ethylhexanoate salt

DBTD: dibutyltin dilaurate

[Table 6]

Table 6

| | Stability | | Optical laminated sheet | Laminate | |
|---|---|---|---|---|---|
| | Viscosity (mPa ·s) | | | Adhesion (N/10 mm) | Moldability |
| | Initial | After 3 hrs | | | |
| Example 1 | 15 | 17 | OL1 | 8 | 0 |
| Example 2 | 15 | 24 | OL1 | 11 | 0 |
| Example 3 | 13 | 36 | OL1 | 12 | 0 |
| Example 4 | 12 | 112 | OL1 | 12 | 1 |
| Example 5 | 15 | 80 | OL1 | 11 | 0 |
| Example 6 | 15 | 24 | OL2 | 11 | 0 |
| Example 7 | 15 | 24 | OL3 | 11 | 0 |
| Example 8 | 15 | 24 | OL4 | 11 | 0 |
| Example 9 | 8 | Gelation | OL1 | 4 | 3 |
| Example 10 | 15 | 16 | OL1 | 1 | 0 |
| Example 11 | 15 | 21 | OL1 | 11 | 0 |
| Example 12 | 15 | 23 | OL1 | 20 | 0 |
| Example 13 | 15 | 23 | OL1 | 30 | 0 |
| Example 14 | 15 | 25 | OL1 | 30 | 0 |
| Example 15 | 15 | 112 | OL5 | 8 | 0 |
| Comparative Example 1 | 15 | 16 | OL1 | 0.2 | 0 |
| Comparative Example 2 | 15 | 23 | OL1 | 0.3 | 0 |
| Comparative Example 3 | 15 | 16 | OL1 | 0.3 | 0 |

Hereinafter, preferred embodiments of the present invention will be described.

[1] A curable composition includes a first monomer having an allyl group and at least one of a second monomer or an organosilicon compound,

the second monomer having at least one polymerizable group selected from the group consisting of an acryloyl group, a methacryloyl group, and a vinyl group, and at least one first functional group selected from the group consisting of an isocyanate group, an isothiocyanate group, an epoxy group, an oxetanyl group, and an aldehyde group, and
the organosilicon compound having at least one second functional group selected from the group consisting of an acryloyl group, a methacryloyl group, and a vinyl group and a hydrolyzable group.

[2] In the curable composition as described in [1], the curable composition includes the second monomer, in which the

second monomer includes a compound represented by the following formula (1):

[Chem. 6]

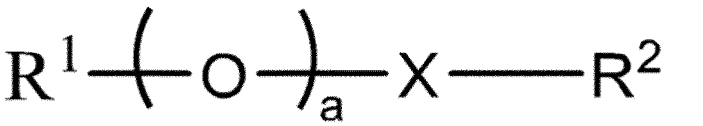 (1)

where in formula (1),

$R^1$ is an acryloyl group, a methacryloyl group, or a vinyl group,
$R^2$ is an isocyanate group or an isothiocyanate group,
X is a linear or branched alkylene group having 1 to 10 carbon atoms or an alkyleneoxyalkylene group having 2 to 10 carbon atoms, and
a is 0 or 1.

[3] In the curable composition as described in [1] or [2], a proportion of the second monomer is 0.1% by mass or more and 15% by mass or less.
[4] In the curable composition as described in any one of [1] to [3], a ratio M2/M1 of mass M2 of the second monomer to mass M1 of the first monomer is 0.005 or more and 0.20 or less.
[5] In the curable composition as described in any one of [1] to [4], the curable composition includes the second monomer, in which the second monomer includes at least one selected from the group consisting of 2-isocyanatoethyl acrylate and 2-isocyanatoethyl methacrylate.
[6] The curable composition as described in any one of [1] to [5] further includes at least one polymerization catalyst selected from the group consisting of a reaction catalyst for urethanes, a reaction catalyst for ureas, and a reaction catalyst for isocyanurates.
[7] In the curable composition as described in [6], the polymerization catalyst includes a quaternary ammonium salt.
[8] In the curable composition as described in any one of [1] to [7], the first monomer includes allyl diglycol carbonate.
[9] A cured product is of the curable composition as described in any one of [1] to [8].
[10] A laminate includes a substrate including a polyvinyl alcohol resin or a cellulose resin; and the cured product as described in [9], the cured product coating at least a portion of a surface of the substrate.
[11] A laminate includes a first substrate and a second substrate, each including a polyvinyl alcohol resin or a cellulose resin;

an adhesive layer interposed between the first substrate and the second substrate to adhere them to each other, and
the cured product as described in [9] or [10], the cured product coating at least a portion of a surface of at least one of the first substrate or the second substrate.

[12] In the laminate as described in [11], the adhesive layer includes a functional dye.
[13] In the laminate as described in [11] or [12], the adhesive layer includes a photochromic compound.
[14] An optical article includes the laminate as described in any one of [10] to [13].
[15] A lens includes the optical article as described in [14].
[16] A lens includes the optical article as described in [15].

## Claims

**1.** A curable composition comprising a first monomer having an allyl group, and at least one of a second monomer and/or an organosilicon compound,

the second monomer having at least one polymerizable group selected from the group consisting of an acryloyl group, a methacryloyl group, and a vinyl group, and at least one first functional group selected from the group consisting of an isocyanate group, an isothiocyanate group, an epoxy group, an oxetanyl group, and an aldehyde group, and
the organosilicon compound having at least one second functional group selected from the group consisting of an

acryloyl group, a methacryloyl group, and a vinyl group and a hydrolyzable group.

2. The curable composition according to claim 1, the curable composition comprising the second monomer, wherein the second monomer includes a compound represented by the following Formula (1):

[Chem. 1]

$$R^1 \!-\!\left( O \right)_a\!-\! X - R^2 \quad (1)$$

wherein in Formula (1),

$R^1$ is an acryloyl group, a methacryloyl group, or a vinyl group,
$R^2$ is an isocyanate group or an isothiocyanate group,
X is a linear or branched alkylene group having 1 to 10 carbon atoms or an alkyleneoxyalkylene group having 2 to 10 carbon atoms, and
a is 0 or 1.

3. The curable composition according to claim 1 or 2,
wherein a proportion of the second monomer is 0.1% by mass or more and 15% by mass or less.

4. The curable composition according to claim 1 or 2,
wherein a ratio M2/M1 of mass M2 of the second monomer to mass M1 of the first monomer is 0.005 or more and 0.20 or less.

5. The curable composition according to claim 1 or 2, the curable composition comprising the second monomer, wherein the second monomer comprises at least one selected from the group consisting of 2-isocyanatoethyl acrylate and 2-isocyanatoethyl methacrylate.

6. The curable composition according to claim 1 or 2, further comprising at least one polymerization catalyst selected from the group consisting of a reaction catalyst for urethanes, a reaction catalyst for ureas, and a reaction catalyst for isocyanurates.

7. The curable composition according to claim 6, wherein the polymerization catalyst comprises a quaternary ammonium salt.

8. The curable composition according to claim 1 or 2,
wherein the first monomer comprises allyl diglycol carbonate.

9. A cured product of the curable composition according to claim 1 or 2.

10. A laminate comprising a substrate including a polyvinyl alcohol resin or a cellulose resin; and
the cured product according to claim 9, the cured product coating at least a portion of a surface of the substrate.

11. A laminate comprising a first substrate and a second substrate, each including a polyvinyl alcohol resin or a cellulose resin;

an adhesive layer interposing between and adhering the first substrate and the second substrate; and
the cured product according to claim 9, the cured product coating at least a portion of a surface of at least one of the first substrate and/or the second substrate.

12. The laminate according to claim 11, wherein the adhesive layer includes a functional dye.

13. The laminate according to claim 11, wherein the adhesive layer includes a photochromic compound.

**14.** An optical article comprising the laminate according to claim 10.

**15.** A lens comprising the optical article according to claim 14.

**16.** A lens comprising the optical article according to claim 15.

FIG. 1

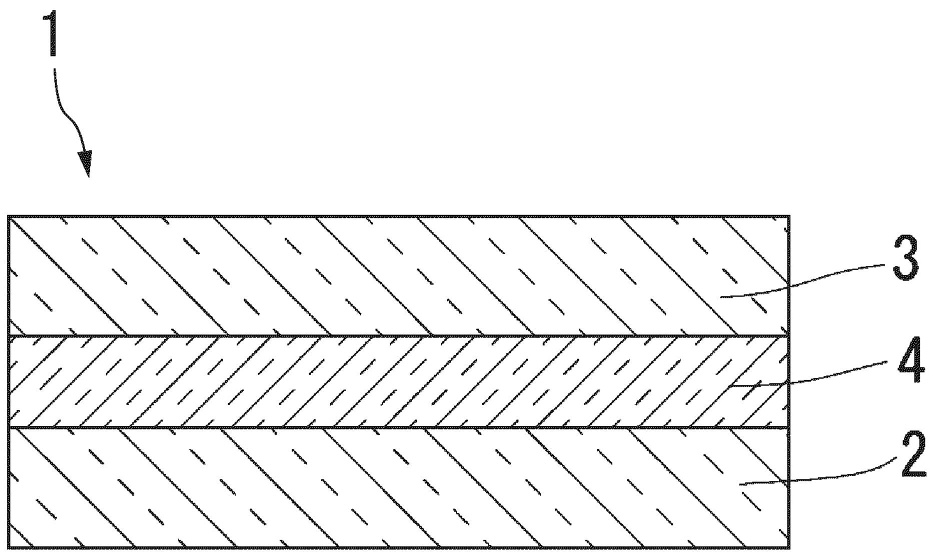

FIG. 2

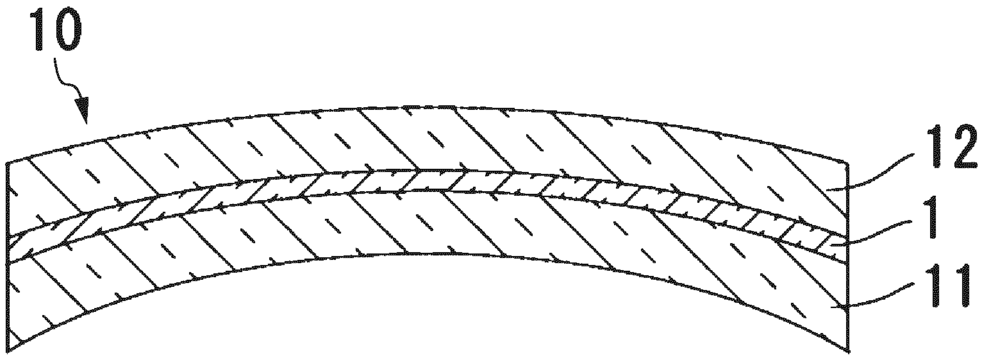


FIG. 3

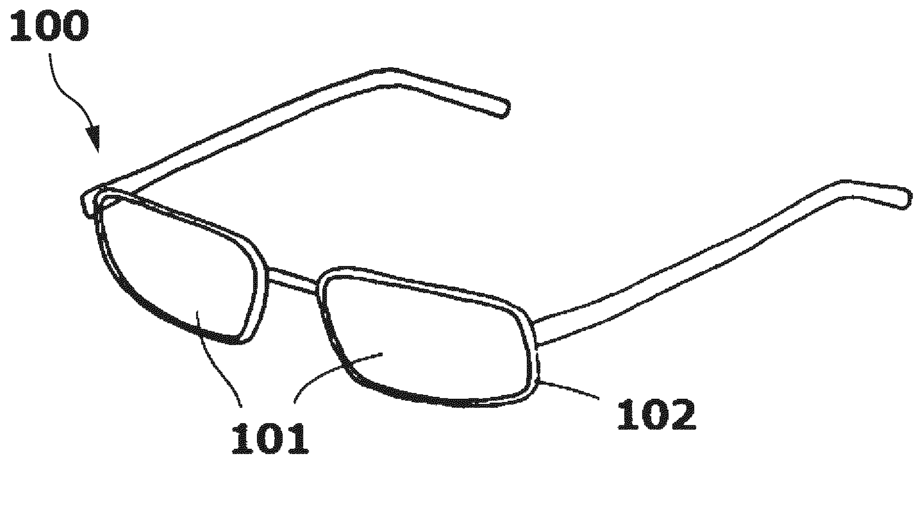

**INTERNATIONAL SEARCH REPORT**

International application No.
**PCT/JP2023/015506**

**A. CLASSIFICATION OF SUBJECT MATTER**

***C08F 18/24***(2006.01)i; ***B32B 7/12***(2006.01)i; ***B32B 27/00***(2006.01)i; ***B32B 27/30***(2006.01)i; ***B32B 27/40***(2006.01)i; ***C08G 18/02***(2006.01)i; ***C08G 18/71***(2006.01)i; ***G02B 1/04***(2006.01)i; ***G02C 7/00***(2006.01)i; ***G02C 7/10***(2006.01)i
FI: C08F18/24; B32B27/30 102; B32B27/00 D; G02B1/04; G02C7/10; G02C7/00; B32B27/30 A; B32B27/40; B32B7/12; C08G18/02 020; C08G18/71 010

According to International Patent Classification (IPC) or to both national classification and IPC

**B. FIELDS SEARCHED**

Minimum documentation searched (classification system followed by classification symbols)

C08F18/24; B32B7/12; B32B27/00; B32B27/30; B32B27/40; C08G18/02; C08G18/71; G02B1/04; G02C7/00; G02C7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 3-143905 A (TOKUYAMA SODA CO LTD) 19 June 1991 (1991-06-19) p. 8, upper let column, lines 2-3, p. 8, lower left column, line 2, table 4, example 33 | 1-5, 9 |
| A | | 6-8, 10-16 |
| X | JP 2004-534895 A (E.I. DU PONT DE NEMOURS AND COMPANY) 18 November 2004 (2004-11-18) paragraph [0087] | 1-5, 9 |
| A | | 6-8, 10-16 |
| P, X | JP 2022-67912 A (TOYO TIRE CORP) 09 May 2022 (2022-05-09) paragraph [0033], table 1, raw reactant 9 | 1-3, 5, 6, 9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 June 2023** | **11 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/015506**

| Patent document cited in search report | Publication date (day/month/year) | Patent family member(s) | Publication date (day/month/year) |
|---|---|---|---|
| JP 3-143905 A | 19 June 1991 | (Family: none) | |
| JP 2004-534895 A | 18 November 2004 | US 2003/0018124 A1<br>paragraph [0103]<br>WO 2003/006520 A1<br>EP 1425324 A1<br>CN 1529724 A<br>KR 10-2004-0018433 A | |
| JP 2022-67912 A | 09 May 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015005391 A
- WO 2019163728 A